# EUROPÄISCHE PATENTSCHRIFT

(11) **EP 3 474 982 B1**
(45) Veröffentlichungstag und Bekanntmachung des Hinweises auf die Patenterteilung: **19.02.2020**
(21) Anmeldenummer: 17726329.0
(22) Anmeldetag: 01.06.2017
(51) Int. Cl.: B01J 19/30, F28F 25/08, B01J 19/32

(54) **FÜLLKÖRPER**
PACKING ELEMENT
ÉLEMENTS DE GARNISSAGE

(30) Priorität: 18.08.2016 EP 16184798
(43) Veröffentlichungstag der Anmeldung: 01.05.2019
(73) Patentinhaber: Vereinigte Füllkörper-Fabriken GmbH & Co. KG, 56235 Ransbach-Baumbach (DE)
(72) Erfinder: SCHWÄMMLEIN, Dr. Kurt, 55545 Bad Kreuznach (DE)
(74) Vertreter: Quermann, Helmut
(86) Internationale Anmeldenummer: PCT/EP2017/063275
(87) Internationale Veröffentlichungsnummer: WO 2018/033262

(56) Entgegenhaltungen:
- EP-A1- 0 226 306
- EP-A1- 1 057 528
- EP-A1- 1 731 221
- WO-A1-95/04246
- DE-C- 907 289

## Beschreibung

Die Erfindung betrifft einen Füllkörper, insbesondere für Stoff- und/oder Wärmeaustauschkolonnen, der von einer Gas- und/oder Flüssigkeitsströmung durchsetzbar ist, aufweisend eine Außenstruktur, eine Innenstruktur und aufweisend mehrere Haltemittel zum Herstellen einer Verbindung zwischen dem Füllkörper und weiteren Füllkörpern, wobei das jeweilige Haltemittel in den jeweils zu verbindenden Füllkörper einsteckbar ist.

Es ist bekannt, Füllkörper verschiedener Ausführungsformen als regellose Schüttungen in Kolonnen, Reaktoren und ähnlichen Apparaten einzusetzen. Technische Anwendungen sind beispielsweise gegeben bei thermischen, chemischen oder physikalischen Verfahren, wie Absorption, Desorption (Strippung), Destillation, Rektifikation, Extraktion, direkter Gaskühlung, regenerativer Verbrennung, katalytischer Stoffumwandlung und anderen verfahrenstechnischen Trennprozessen, bei denen verschiedene Phasen bzw. Medien effektiv in Kontakt gebracht werden sollen.

Die Füllkörper vergrößern die Oberfläche in dem von ihnen ausgefüllten Volumen und intensivieren dadurch den Stoff- bzw. Wärmeaustausch zwischen den verschiedenen Phasen bzw. Medien innerhalb dieses Volumens. Die Phasengrenzfläche für den Stoffübergang stimmt in der Regel nicht exakt mit der geometrischen Füllkörperoberfläche überein, sondern ist vielmehr die Summe aus der während des Prozesses benetzten Füllkörperoberfläche und der Oberflächensumme aller sich im Füllkörperbett bildenden Tropfen.

Ferner dienen Füllkörper bzw. Füllkörperschüttungen der Abscheidung kleiner und kleinster Flüssigkeitströpfchen bis hin zur Abscheidung von sogenannten Aerosolen. Auch finden Füllkörper als Aufwuchsfläche für einen Biofilm in biologischen Anlagen und als Tropfkörper in Wäschern Anwendung.

Das durch die Füllkörper gebildete Füllkörperbett weist gegenüber der Strömung der Phasen einen bestimmten Druckverlust auf. Dieser hängt vom Gasbelastungsfaktor, der Berieselungsdichte, dem Füllkörpertyp, der Füllkörpergröße, der geometrischen Gestaltung des Füllkörpers sowie der Anordnung der Füllkörper und weiteren Parametern ab.

Die Füllkörper müssen für alle Anwendungen eine geeignete mechanische Stabilität und eine geeignete Oberfläche aufweisen, sowie eine gute Durchmischung der verschiedenen Phasen oder Medien erzeugen, ohne der Strömung der Phasen oder Medien jedoch einen zu großen Druckverlust entgegenzusetzen. Das für den jeweiligen Trennprozess oder chemischen bzw. thermischen Prozess notwendige Schüttvolumen soll so gering wie möglich sein.

In der Regel muss ein geeigneter Kompromiss zwischen den entgegengesetzt verlaufenden Anforderungen, wie zum Beispiel geringer Druckverlust bei möglichst großer Füllkörperoberfläche, gefunden werden.

Ein derartiger Füllkörper, der mit weiteren Füllkörpern in Form einer regellosen Schüttung für die vorgenannten Anwendungsgebiete Anwendung findet, ist beispielsweise aus der Druckschrift EP 1 586 375 A1 bekannt.

Neben einer regellosen Schüttung von Füllkörpern als Einbauten in Apparaten in der Verfahrenstechnik finden auch sogenannte "strukturierte Packungen" als Einbauten Anwendung. Eine derartige "strukturierte Packung" umfasst meist eine Mehrzahl von Packungselementen, die in einer vorgegebenen Richtung der Fluidströmung in einer bestimmten Abfolge und Ausrichtung zueinander angeordnet sind. Eine "strukturierte Packung" der vorgenannten Art ist beispielsweise in der Druckschrift EP 1 166 868 A2 beschrieben.

Aus der Druckschrift EP 1 057 528 ist ein Füllkörper bekannt, der eine geschlossenen äußere Wandung aufweist, wobei die geschlossene äußere Wandung Durchtrittsöffnungen aufweist. Weiterhin weist der Füllkörper im Bereich der Durchtrittsöffnungen Haltemittel in Form von Steckmuffen auf, um den Füllkörper mit einem anderen identisch ausgebildeten Füllkörper zu verbinden. Das Verbinden erfolgt im Bereich der Durchtrittsöffnungen und derart, dass die entsprechende Durchtrittsöffnung des einen Füllkörpers in die entsprechende Durchtrittsöffnung des anderen Füllkörpers mündet, wodurch aufgrund der geschlossenen äußeren Wandung des jeweiligen Füllkörpers ein füllkörperinterner Strömungskanal gebildet wird.
Ferner ist aus der Druckschrift EP 0 663 055 B1 ein Füllkörper bekannt, der die Merkmale des Oberbegriffs des Patentanspruchs 1 aufweist. Der Füllkörper weist eine durch Außenstäbe gebildete Außenstruktur, eine Innenstruktur, ein erstes Haltemittel zum Herstellen einer Verbindung zwischen dem Füllkörper und einem zweiten Füllkörper sowie ein zweites Haltemittel zum Herstellen einer Verbindung zwischen dem Füllkörper und einem dritten Füllkörper auf, wobei das jeweilige Haltemittel in den jeweiligen zu verbindenden Füllkörper einsteckbar ist. Die in der vorgenannten Druckschrift beschriebenen Füllkörper ermöglichen es, mittels der Haltemittel mehrere Füllkörper zu einer linearen Anordnung von Füllkörpern zusammenzustecken.

Aufgabe der vorliegenden Erfindung ist es, einen Füllkörper, der die Merkmale des Oberbegriffs des Patentanspruchs 1 aufweist, derart weiterzubilden, dass es mit derart gestalteten Füllkörpern möglich ist, unterschiedliche Einbauten, beispielsweise eine regellose Schüttung von Einzelfüllkörpern, eine regellose Schüttung von teilweise geordneten Füllkörpern, eine "strukturierte Packung" oder ein Packungselement für eine "strukturierte Packung" zu verwirklichen. Ferner ist Aufgabe der vorliegenden Erfindung, eine Anordnung von miteinander verbundenen Füllkörpern, die gemäß den Merkmalen des Patentanspruchs 1 ausgebildet sind, zu schaffen.

Gelöst wird die Aufgabe durch einen Füllkörper, der gemäß den Merkmalen des Patentanspruchs 1 ausgebildet ist, ferner durch eine Anordnung, die gemäß dem Patentanspruch 23 ausgebildet ist.

Der Füllkörper weist eine durch Außenstäbe gebildete Außenstruktur, eine Innenstruktur, ein erstes Haltemittel zum Herstellen einer Verbindung zwischen dem Füllkörper und einem zweiten Füllkörper sowie ein zweites Haltemittel zum Herstellen einer Verbindung zwischen dem Füllkörper und einem dritten Füllkörper auf, wobei das jeweilige Haltemittel in den jeweiligen Füllkörper einsteckbar ist. Ferner ist durch die Außenstruktur eine Außenkontur des Füllkörpers mit zwei einander abgewandten Hauptausdehnungsflächen und mit zumindest drei an die Hauptausdehnungsflächen angrenzenden Seitenflächen gebildet. Dabei ist das erste Haltemittel im Bereich einer ersten Seitenfläche ausgebildet und das zweite Haltemittel ist im Bereich einer zweiten Seitenfläche ausgebildet.

Ein derart gestalteter Füllkörper ermöglicht es, durch Zusammenstecken von Einzelfüllkörpern einen neuen Füllkörper zu schaffen, beispielsweise durch ein Zusammenstecken von zwei einzelnen Füllkörpern einen annähernd doppelt so großen Füllkörper zu schaffen. Solche mittels Zusammenstecken gebildete Füllkörper können wiederum in Form einer regellosen Schüttung als Einbauten verwendet werden. Abhängig von den verwendeten einzelnen Füllkörpern und der Anordnung der verbundenen Füllkörper zueinander, können Füllkörper mit unterschiedlichsten Eigenschaften, beispielsweise spezifischen Oberflächen, Druckwiderständen usw., in einfacher Art und Weise mittels Zusammenstecken geschaffen und an die spezifischen Anforderungen individuell angepasst werden.

In einer Schüttung von derart miteinander verbundenen Füllkörpern bilden die verbundenen Füllkörper geordnete Bereiche, wobei die Eigenschaften der Bereiche, beispielsweise die Ausdehnung der Bereiche, durch die Anzahl und Ausrichtung der miteinander verbunden Füllkörper der Anordnung variiert werden kann.

Dadurch, dass die Außenstruktur durch Außenstäbe gebildet ist, weist der Füllkörper eine gitterförmige Außenstruktur und somit eine sehr offene Außenkontur in beliebiger Raumrichtung auf, die einer Gas- und/oder Flüssigkeitsströmung einen geringen Widerstand entgegensetzt, wodurch der Druckverlust minimiert und ein Eindringen der einströmenden Fluide in das Füllkörperinnere und ein Ausströmen des Fluids aus dem Füllkörperinneren begünstigt wird.

Die Außenstäbe sind vorzugsweise dünnwandig ausgebildet, um einen möglichst großen Flächenanteil der Außenkontur offen zu gestalten und somit einen geringen Strömungswiderstand und ein geringes Gewicht des Füllkörpers zu erzielen. Dadurch können auch hohe Füllkörperkolonnen gebildet werden, wobei eine Verformung oder gar Zerstörung insbesondere der an einem Behälterboden angeordneten Füllkörper vermieden ist.

Bevorzugt weisen die Außenstäbe einen sich nach außen oder innen verjüngenden, insbesondere spitz verlaufenden Querschnitt auf. Vorzugsweise weisen die Außenstäbe abwechselnd einen sich nach außen verjüngenden und einen sich nach innen verjüngenden Querschnitt auf.

Als besonders vorteilhaft wird es angesehen, wenn die Außenstäbe verdrillt gestaltet sind. Durch die Verdrillung der Stäbe wird die Vermischung der einströmenden Fluide verbessert.

Insbesondere für eine verdrillte Dreiecksform der Stäbe und/oder wenn die Verjüngung der Stäbe abwechselnd nach außen und nach innen gerichtet ist, wird das von außen einströmende Fluid sowie das vom Innenraum nach außen strömende Fluid jeweils leicht abgelenkt, wodurch jeweils eine verbesserte Quervermischung erreicht und die Summe der Druckverlustanteile für den ein- und ausströmenden Anteil der Fluidströmung nicht nachteilig beeinflusst wird.

Es ist durchaus denkbar und bevorzugt, wenn die Außenstäbe Abtropfnasen oder Gebilde, die als Abtropfnasen dienen können, aufweisen. Diese vergrößern die Oberfläche und führen daher zu einem verbesserten Stoff- und/oder Wärmeaustausch.

Gemäß einer vorteilhaften Ausführungsform der Erfindung ist des Weiteren vorgesehen, dass die Außenstäbe eine einem Dreieck, einem Trapez, einem L, einem Kranz oder einem Rechteck identische oder ähnliche Querschnittsform aufweisen. Die Außenstäbe sollten zudem eine sich verjüngende Querschnittsform aufweisen, wobei die Verjüngung über die gesamte oder zumindest eine Teillänge dieser Außenstäbe nach außen gerichtet ist. Diese Verjüngung nach außen ist von besonderem Vorteil unter dem Aspekt eines minimalen Druckverlusts.

Die Außenstäbe und/oder Innenstäbe können eine Längs- und/oder Querprofilierung aufweisen.

Vorzugsweise sind die Außenstäbe in ihrer Grundform ideal teilkreisförmig, unregelmäßig oder regelmäßig in verschiedenen Richtungen gewellt, beispielsweise nussförmig gewellt oder teilgewellt mit geradlinigen Anteilen, mit zackenförmigen Erhebungen ausgestaltet, verdrillt, glatt, längs- oder querprofiliert, zum überwiegenden Teil in einer Querschnittsform ausgeführt, die einem Dreieck oder einem Trapez oder einer ähnlichen Form entspricht, wobei aber die spitzen oder schmalen Seiten bzw. schmäleren Teilflächen überwiegend nach außen gerichtet sind, gestaltet. Sie verjüngen sich also überwiegend nach außen und bringen somit jedweder Strömung von vorneherein einen geringen bzw. minimalen Strömungswiderstand entgegen. Um die äußere Struktur möglichst offen zu gestalten, d.h. damit von vorneherein sowohl von einer strömenden Gasphase als auch von einer strömenden Flüssigphase ein möglichst großer Anteil auch in das Füllkörperinnere gelangt und der jeweiligen Fluidströmung ein minimaler Strömungswiderstand entgegengesetzt wird, werden zweckmäßig alle Stäbe möglichst schlank ausgeführt. Beispielsweise beträgt ein Verhältnis der Stablänge zur Wurzel aus einer Querschnittsfläche des Stabes in besonders bevorzugter Weise 5:1.

In bevorzugter Weise ist die Querschnittsform der Außenstäbe abschnittsweise abwechselnd ein sich nach außen verjüngendes Dreieck bzw. Trapez bzw. ähnliche Form und ein sich nach innen verjüngendes Dreieck bzw. Trapez bzw. ähnliche Form.

Der äußere Bereich der Außenstäbe kann auch jeweils mit Abtropfnasen besetzt sein. Derartige Gebilde bzw. Abtropfnasen sind bevorzugt strömungsgünstig ausgeformt, so dass der Strömung kein nennenswert höherer Strömungswiderstand entgegengebracht wird im Vergleich zu einer Ausführung ohne solche Gebilde. Derartige Gebilde verbessern jedoch den Stoff- und Wärmeaustausch durch die anteilig vergrößerte Oberfläche und die dadurch vermehrte Tropfenbildung, die ihrerseits einen zusätzlichen anteiligen Beitrag zu einer weiteren vergrößerten Oberfläche für den Stoff- und Wärmeaustausch bildet, gepaart mit dem weiteren sehr positiven Effekt einer sehr geringen Diffusionswegstrecke infolge der geringen Tropfengröße.

Vorzugsweise sind der erste und der zweite Füllkörper identisch ausgebildet und werden derart zusammengesteckt, dass die beiden Hauptausdehnungsflächen in die gleiche Richtung weisen.

Der dritte Füllkörper kann beispielsweise derart mit dem ersten Füllkörper verbunden werden, dass die drei Füllkörper, insbesondere die Hauptausdehnungsflächen oder durch die Außenstruktur des jeweiligen Füllkörpers gebildeten Ebenen in der gleichen Ebene angeordnet sind und die Hauptausdehnungsflächen in die gleiche Richtung weisen, wodurch eine besonders flache Anordnung der Füllkörper verwirklicht ist.

Der Füllkörper ermöglicht es dem Anwender somit, diesen als losen Füllkörper für eine regellose Schüttung zu verwenden oder mehrere derart gestaltete Füllkörper zu verbinden, um auf diese Weise einen neuen, größeren Füllkörper für eine regellose Schüttung zu schaffen.

Darüber hinaus lassen sich derart gestaltete Füllkörper zu einer flächigen Anordnung verbinden, insbesondere zu einer geordneten Anordnung von Füllkörpern verbinden, wodurch eine "strukturierte Packung" oder ein Packungselement für eine strukturierte Packung aus den Einzelfüllkörpern gebildet werden kann. Das Zusammenstecken der Füllkörper ermöglicht es dem Anwender, die aus den Füllkörpern gebildete, strukturierte Packung in ihren Abmessungen an die Gegebenheiten, beispielsweise die Innenabmessungen der Kolonne, insbesondere den Querschnitt der Kolonne, individuell und in einfacher Art und Weise anzupassen.

In einer besonders bevorzugten Ausführungsform ist vorgesehen, dass die Innenstruktur zumindest ein inneres Leitprofil aufweist, wobei das innere Leitprofil geneigt zu den Hauptausdehnungsflächen ausgebildet ist. In diesem Zusammenhang ist der Begriff "geneigt" dahingehend zu verstehen, dass das innere Leitprofil weder senkrecht noch parallel zu den Hauptausdehnungsflächen ausgebildet ist. Insbesondere ist durch die Außenstruktur auf der Seite einer Hauptausdehnungsfläche eine Ebene gebildet, wobei das innere Leitprofil geneigt zu dieser Ebene ausgebildet ist, vorzugsweise ein Winkel zwischen dem inneren Leitprofil und dieser Ebene ≥20° bis ≤70° beträgt.

Das zwischen den beiden Hauptausdehnungsflächen ausgebildete innere Leitprofil bewirkt, dass ein von der einen Hauptausdehnungsfläche in Richtung der anderen Hauptausdehnungsfläche strömendes Fluid durch das innere Leitprofil umgelenkt wird, wodurch sich die Strömungsgeschwindigkeit und die Strömungsrichtung des den Füllkörper durchströmenden Fluids verändert, was sich vorteilhaft auf den Stoff- und/oder Wärmeaustausch auswirkt.

Je nach Neigungswinkel und Form des inneren Leitprofils kann eine mehr oder weniger starke Veränderung der Strömungsgeschwindigkeit und Strömungsrichtung des Fluids erreicht werden. Das innere Leitprofil ist vorzugsweise flächig ausgebildet. Das Leitprofil kann eben, gebogen, gewellt und/oder verdrillt gestaltet sein. Es ist durchaus denkbar, dass das Leitprofil Durchtrittsöffnungen, beispielsweise in Form von Schlitzen oder Löchern, oder andere Profilierungen aufweist. Durch die Durchtrittsöffnung wird der Strömungswiderstand des Füllkörpers verringert und zudem das Strömungsprofil des einströmenden Fluids lokal variiert. Zudem kann das Leitprofil auf seiner Oberfläche vorzugsweise stabförmig ausgebildete Vorsprünge aufweisen.

Dabei stellt vorzugsweise ein kleiner Winkel eine sehr flache Ausführungsform des Füllkörpers mit entsprechend hohem Strömungswiderstand dar. Ein Füllkörper mit einem Leitprofil im Bereich von 70° weist eine entsprechend größere Bauhöhe auf und zeichnet sich durch einen niedrigeren Druckverlust aus.

Die Oberflächen der Leitprofile können eben, gewellt, glatt, mit herausragenden Stäbchen, gewölbt, propellerförmig um eine gemeinsame Verbindungsachse, mit Löchern, mit Schlitzen oder anderen Profilierungen ausgestaltet sein

Durch Verbinden von mehreren Füllkörpern mittels des ersten Haltemittels und des zweiten Haltemittels kann somit eine flache Anordnung von Füllkörpern geschaffen werden, die sich im Wesentlichen in zwei Raumrichtungen erstreckt, wobei bei entsprechend identischer Ausrichtung der inneren Leitprofile der Füllkörper und/oder identischer Ausrichtung der verbundenen Füllkörper eine "strukturierte Packung" bzw. ein Packungselement geschaffen ist, die bzw. das eine identische Umlenkung des die Anordnung von der einen Hauptausdehnungsfläche der Füllkörper in Richtung der anderen Hauptausdehnungsfläche der Füllkörper durchströmenden Fluids über annähernd den gesamten Bereich der Anordnung entsprechend dem Neigungswinkel der Leitprofile bewirkt.

In einer vorteilhaften Weiterbildung der Erfindung weist der Füllkörper ein drittes Haltemittel zum Herstellen einer Verbindung zwischen dem Füllkörper und einem vierten Füllkörper auf, wobei das Haltemittel im Bereich einer der Hauptausdehnungsflächen ausgebildet und in den vierten Füllkörper einsteckbar ist.

Eine derartige Ausbildung des Füllkörpers ermöglicht es, diesen mit weiteren Füllkörpern in Richtung der Hauptausdehnungsfläche zu verbinden. Entsprechend können beispielsweise zwei identisch ausgebildete Füllkörper im Bereich der jeweiligen Hauptausdehnungsfläche derart miteinander verbunden werden, dass ein doppelt so hoher, neuer Füllkörper geschaffen ist.

Insbesondere bei Füllkörpern, die ein inneres Leitprofil aufweisen, kann durch entsprechende Ausrichtung der in Richtung der Hauptausdehnungsflächen verbundenen Füllkörper eine gezielte Umlenkung des die Füllkörper in Richtung der Hauptausdehnungsflächen durchströmenden Fluids erzielt werden. Beispielsweise können die miteinander verbunden Füllkörper identisch ausgerichtet sein, wodurch eine gleichmäßige Umlenkung des Fluidstroms, insbesondere bei übereinander angeordneten flächigen Lagen von Füllkörpern, erreicht wird. Es ist aber auch durchaus denkbar, dass die Leitprofile von übereinander angeordneten Füllkörpern und/oder die Leitprofile von übereinander angeordneten, flächigen Lagen von Füllkörpern entgegengesetzt ausgerichtet sind, insbesondere jeder zweite Füllkörper bzw. jede zweite flächige Lage von Füllkörpern identisch ausgerichtet ist, wodurch ein in die Anordnung in Richtung der Hauptausdehnungsfläche einströmendes Fluid innerhalb der Füllkörperanordnung zickzack-förmig umgelenkt wird.

Weiterhin ist denkbar, übereinander angeordnete, Leitprofile aufweisende Füllkörper derart auszurichten, dass benachbarte Füllkörper bzw. benachbarte Lagen von Füllkörpern in Richtung der Hauptausdehnungsflächen zueinander sukzessiv verdreht sind, wodurch auf Grund der Ausrichtung und Abfolge der Leitprofile eine Verdrillung des die Anordnung in Richtung der Hauptausdehnungsflächen durchströmenden Fluids erreicht wird.

Vorzugsweise sind das erste und das zweite Haltemittel derart mit dem ersten und dem zweiten Füllkörper verbindbar, dass ein flächige, insbesondere ebene Anordnung von Füllkörpern herstellbar ist, wobei das dritte Haltemittel die Verbindung dieser Anordnung mit dem vierten Füllkörper und/oder einer anderen flächigen Anordnung von Füllkörpern ermöglicht, wodurch aus derart gestalteten Füllkörpern ein Volumenkörper gebildet werden kann, insbesondere ein Volumenkörper, der mehrere flächige Lagen von Füllkörpern aufweist.

Vorzugsweise weist der Füllkörper ein zu dem jeweiligen Haltemittel korrespondierendes Gegenmittel auf. Hierdurch wird insbesondere die mechanische Stabilität der Anordnung von miteinander verbundenen Füllkörpern erhöht und das Verbinden der Füllkörper erleichtert. Beispielsweise können diese Gegenmittel als Ausnehmungen oder Durchgangsöffnungen für das Haltemittel ausgebildet sein. Vorzugsweise weist der Füllkörper die gleiche Anzahl von Haltemitteln und Gegenmitteln auf.

In diesem Zusammenhang ist es durchaus denkbar, dass ein Teilbereich der Außenstruktur das Gegenmittel bildet. Beispielsweise kann das Gegenmittel durch zwei gegenüberliegende, die Seitenfläche begrenzende Längsstäbe der Außenstruktur oder einen Teilbereich dieser Längsstäbe gebildet sein.

Es wird als besonders vorteilhaft angesehen, wenn das jeweilige Haltemittel und/oder das jeweilige Gegenmittel von der Außenkontur nach außen hervorstehend ausgebildet ist. Dadurch ist zum einen das Verbinden des Füllkörpers mit dem jeweiligen Füllkörper erleichtert. Zum anderen ist dadurch sichergestellt, dass bei miteinander verbundenen Füllkörpern die bevorzugte größtmögliche Offenheit und größtmögliche effektive Oberfläche gewährleistet ist, da nur kleine Teilbereiche der miteinander verbundenen Füllkörper aneinander anliegen, insbesondere die Außenstäbe nicht unmittelbar aneinander anliegen, so dass ein minimaler Druckverlust jeglicher Fluidströmung als auch bestmöglicher Stoff- und Wärmedurchtritt jeglicher Fluidströmung sichergestellt ist.

Dabei ist es durchaus denkbar, dass die Haltemittel derart gestaltet sind, dass die Haltemittel bei Verwendung des unverbundenen Füllkörpers in einer regellosen Schüttung die Bildung von Abtropfstellen bei einer den Füllkörper benetzenden Flüssigkeit begünstigen.

In einer besonders bevorzugten Ausführungsform ist das Haltemittel in den zu verbindenden Füllkörper, insbesondere in das Gegenmittel des zu verbindenden Füllkörpers, rastierend einsteckbar. Dadurch ist ein Lösen der Verbindung selbst bei starken mechanischen Belastungen und/oder thermischen Belastungen, wie sie beispielsweise in Stoff- und/oder Wärmeaustauschkolonnen auftreten, verhindert.

Als besonders vorteilhaft wird es angesehen, wenn die Hauptausdehnungsflächen und/oder gegenüberliegende Seitenflächen gleichsinnig gekrümmt sind. Diese Ausbildung des Füllkörpers ermöglicht es, derart gestaltete Füllkörper mit möglichst geringem Abstand der Außenkonturen der Füllkörper miteinander zu verbinden, wodurch eine möglichst große Raumerfüllung der Anordnung und somit eine möglichst große Oberfläche zwecks Stoffaustausch erzielt wird.

Als besonders vorteilhaft wird es in diesem Zusammenhang angesehen, wenn die Hauptausdehnungsflächen und/oder die Seitenflächen als Ebenen ausgebildet sind, vorzugsweise die beiden Hauptausdehnungsflächen und/oder gegenüberliegende Seitenflächen zueinander parallel ausgebildet sind.

In einer vorteilhaften Weiterbildung ist vorgesehen, dass der Füllkörper, insbesondere das jeweilige Haltemittel und/oder das jeweilige Gegenmittel, einen von der Außenkontur nach außen hervorstehenden Abstandshalter aufweist. Bei Verbindung des Füllkörpers mit einem zu verbindenden Füllkörper liegt ein Teilbereich des jeweils zu verbindenden Füllkörpers an dem Abstandshalter an, wodurch verhindert ist, dass sich die Außenkonturen und/oder Außenstrukturen der beiden Füllkörper kontaktieren, was sich negativ auf die effektive Oberfläche der Anordnung auswirken würde.

Bei Verwendung eines derart gestalteten Füllkörpers in einer regellosen Schüttung von unverbundenen Füllkörpern dienen die Abstandshalter zusätzlich als Abtropfstellen für den Füllkörper benetzende Flüssigkeiten.

Um das Einstecken des Füllkörpers zu erleichtern, weist der Füllkörper in einer bevorzugten Ausführungsform eine Positionierhilfe auf. Die Positionierhilfe kann beispielsweise als Führungsaufnahme für ein von der Außenkontur nach außen hervorstehendes Führungselement ausgebildet sein. Dabei ist es durchaus denkbar, dass das Haltemittel das Führungselement bildet. Vorzugsweise bildet die Positionierhilfe den Abstandshalter oder weist den Abstandshalter auf.

Es wird als vorteilhaft angesehen, wenn das Haltemittel und/oder das Gegenmittel verformbar ist, insbesondere elastisch verformbar ist. Dadurch ist das Einstecken des Haltemittels in das Gegenmittel erleichtert und dennoch eine stabile Verbindung, insbesondere eine rastierende Verbindung gewährleistet.

Es wird als vorteilhaft angesehen, wenn die Außenstruktur einen ersten umlaufenden Außenstab und einen zweiten umlaufenden Außenstab aufweist, wobei der erste umlaufende Außenstab die eine Hauptausdehnungsfläche und der zweite umlaufende Außenstab die andere Hauptausdehnungsfläche umlaufend umschließt.

Der umlaufende Außenstab bzw. die umlaufenden Außenstäbe erhöhen zum einen die mechanische Stabilität des Füllkörpers und zum anderen erhöhen insbesondere profiliert und/oder verdrillte umlaufende Außenstäbe die äußere Oberfläche des Füllkörpers, wodurch der Stoff- und/oder Wärmeaustausch verbessert wird.

In einer vorteilhaften Weiterbildung weist der Füllkörper sich zwischen den Hauptausdehnungsflächen erstreckende andere Außenstäbe auf. Diese verleihen dem Füllkörper eine hohe mechanische Stabilität bei einer dennoch sehr offenen Außenkontur.

Vorzugsweise verbinden die sich zwischen den beiden Hauptausdehnungsflächen erstreckenden anderen Außenstäbe den ersten umlaufenden Außenstab mit dem zweiten umlaufenden Außenstab.

Vorzugsweise sind die Außenstäbe jeweils im Übergangsbereich zwischen zwei Seitenflächen und/oder im Übergangsbereich zwischen einer der beiden Hauptausdehnungsflächen und einer der Seitenflächen ausgebildet. Die Seitenflächen und/oder die Hauptausdehnungsflächen werden somit von den Außenstäben umschlossen und bilden infolge dessen im wesentlichen offene Flächen, durch die ein einströmendes Medium mit geringem Strömungswiderstand in den Füllkörper eindringen bzw. aus dem Füllkörper austreten kann, bei gleichzeitig hoher mechanischer Stabilität der Außenstruktur.

Das Gegenmittel kann beispielsweise durch einen Hohlraum bzw. durch ein Loch an der entsprechenden Position und zwar im Bereich eines Vorsprungs oder einer Kante, d.h. einem entsprechenden Knotenpunkt zweier Außenstäbe, vorzugsweise eines umlaufenden Außenstabes und eines anderen Außenstabes gebildet sein.

Um zum einen den Stoff- und/oder Wärmeaustausch zu intensivieren und zum anderen die Bildung von Abtropfstellen zu begünstigen, ist in einer bevorzugten Ausführungsform vorgesehen, dass die Außenstruktur im Bereich der einen Hauptausdehnungsfläche und im Bereich der anderen Hauptausdehnungsfläche jeweils mehrere nach außen gerichtete Kanten aufweist, insbesondere in einer Aufsichtsprojektion zwei in Projektionsrichtung gegenüberliegende Kanten zueinander versetzt ausgebildet sind.

Vorzugsweise ist das Haltemittel und/oder das Gegenmittel, insbesondere das dritte Haltemittel und/oder das dritte Gegenmittel in einer der Kanten ausgebildet.

Bevorzugt weist die Außenstruktur in einem Randbereich der einen Hauptausdehnungsfläche und/oder in einem Randbereich der anderen Hauptausdehnungsfläche mehrere nach außen hervorstehende Teilbereiche auf. Insbesondere der erste umlaufende Außenstab und/oder der zweite umlaufende Außenstab weisen einen alternierenden Verlauf auf.

In diesem Zusammenhang wird es als besonders vorteilhaft angesehen, wenn ein Außenstab einen der im Randbereich der einen Hauptausdehnungsfläche hervorstehenden Teilbereiche mit einem der im Randbereich der anderen Hauptausdehnungsfläche hervorstehenden Teilbereiche verbindet.

Vorzugsweise ist das Haltemittel und/oder das Gegenmittel, insbesondere das dritte Haltemittel und/oder das dritte Gegenmittel in einem der hervorstehenden Teilbereiche ausgebildet.

In einer besonders bevorzugten Ausführungsform weist der Füllkörper eine prismenartige oder antiprismenartige Außenkontur auf. Insbesondere ist die Außenkontur in der Art eines geraden und/oder regulären Prismas oder Antiprismas mit vorzugsweise sechseckiger Grundfläche ausgebildet, wobei die Hauptflächen des Füllkörpers die Grundfläche und die Deckfläche bilden. Derart gestaltete Füllkörper ermöglichen eine Flächenanordnung und eine Volumenanordnung der Füllkörper mit einem möglichst hohen Grad an Flächenerfüllung und Raumerfüllung, wodurch eine möglichst große effektive Oberfläche der Anordnung von derartigen Füllkörpern mit möglichst geringem Anteil von freier Fläche bzw. freiem Volumen gewährleistet ist.

Der Füllkörper ist vorzugsweise flach ausgebildet. Insbesondere weist der Füllkörper eine Abmessung von (L + B) x 0,5 = (2 bis 10) x H bei L = Länge, B = Breite und H = Höhe des Füllkörpers auf, wobei die Höhe des Füllkörpers die Abmessung des Füllkörpers von der einen Hauptausdehnungsfläche in Richtung der anderen Hauptausdehnungsfläche ist.

Um unterschiedliche Ausrichtungen des Füllkörpers zu dem vierten Füllkörper zu ermöglichen, ist das dritte Haltemittel in einer besonders bevorzugten Ausführungsform des Füllkörpers in zumindest zwei unterschiedlichen Ausrichtungen mit dem vierten Füllkörper verbindbar und/oder das dritte Haltemittel drehbar in dem vierten Füllkörper, insbesondere in dem Gegenmittel des vierten Füllkörpers, lagerbar.

Um zu gewährleisten, dass der Füllkörper mit gleichartig gestalteten Füllkörpern in unterschiedlichen Ausrichtungen verbindbar ist, ist die Gesamtheit der Haltemittel und/oder der Füllkörper und/oder die Außenkontur und/oder ein Querschnitt des Füllkörpers und/oder der Außenkontur vorzugsweise radiärsymmetrisch und/oder spiegelsymmetrisch ausgebildet. Insbesondere bildet der Querschnitt der Außenkontur ein Polygon, insbesondere ein regelmäßiges Polygon.

Es wird als vorteilhaft angesehen, wenn das erste Haltemittel und das zweite Haltemittel zueinander orthogonal ausgebildet sind. Diese Gestaltung ermöglicht es, die Füllkörper in besonders einfacher Art und Weise zu einer flächigen Lage zu verbinden. Dazu werden zunächst mehrere Füllkörper zu einer Reihe entlang des ersten Haltemittels verbunden und anschließend zwei derart gestalteten Reihen entlang der zweiten Haltemittel ineinandergesteckt.

Hinsichtlich des Verbindens der Füllkörper ist es durchaus denkbar, dass das Zusammenstecken automatisiert erfolgt.

Es wird als vorteilhaft angesehen, wenn das von der Hauptausdehnungsfläche nach außen hervorstehende Haltemittel unterschiedlich zu dem von der Seitenfläche nach außen hervorstehenden Haltemittel ausgebildet ist. Dadurch wird verhindert, dass der Füllkörper mit einem dem vierten Füllkörper zugeordneten Haltemittel mit dem ersten Füllkörper und/oder dem zweiten Füllkörper oder der Füllkörper mit dem vierten Füllkörper in einer falschen Ausrichtung, beispielsweise im Bereich einer Seitenfläche des vierten Füllkörpers anstatt im Bereich einer Hauptausdehnungsfläche des vierten Füllkörpers, verbunden wird.

Vorzugsweise sind die von den Seitenflächen nach außen hervorstehenden Haltemittel identisch ausgebildet. Dadurch ist es möglich den Füllkörper an unterschiedlichen Positionen mit dem zweiten Füllkörper und/oder dem dritten Füllkörper zu verbinden.

Vorzugsweise ist der Füllkörper einteilig ausgebildet. Ein solcher Füllkörper kann beispielsweise mittels eines Spritzgussverfahrens hergestellt werden.

Vorzugsweise besteht der Füllkörper aus Kunststoff, Metall oder Keramik.

Eine Anordnung von zumindest drei vorzugsweise identisch ausgebildete Füllkörper nach einer der vorgenannten Ausführungsformen zeichnet sich dadurch aus, dass die Füllkörper im Bereich aneinander angrenzender Seitenflächen mittels der Haltemittel miteinander verbunden sind, wobei die angeordneten Füllkörper eine flächige Lage bilden, insbesondere die durch die Außenstruktur des jeweiligen Füllkörpers gebildeten Ebenen der Füllkörper in derselben Ebene angeordnet sind. Dadurch ist durch das Verbinden der Einzelfüllkörper eine "strukturierte Packung" oder ein Packungselement für eine "strukturierte Packung" gebildet.

Als besonders vorteilhaft wird es dabei angesehen, wenn die Füllkörper der Lage regelmäßig angeordnet sind, vorzugsweise die Füllkörper und/oder die Leitprofile der Füllkörper identisch ausgerichtet sind.

In einer weiteren bevorzugten Ausführungsform der Anordnung ist durch die Anordnung ein Volumenkörper gebildet. Vorzugsweise erstreckt sich die Anordnung von dem Füllkörper, dem zweiten Füllkörper und dem dritten Füllkörper in zwei Raumrichtungen, wobei der vierte Füllkörper in einer dritten Raumrichtung, insbesondere in einer zu den beiden anderen Raumrichtungen senkrechten Raumrichtung, bezüglich des Füllkörpers angeordnet ist.

In diesem Zusammenhang wird es als besonders vorteilhaft angesehen, wenn die Anordnung zumindest zwei aneinander angrenzende flächige Lagen aufweist, insbesondere die Leitprofile von im Bereich der Hauptausdehnungsflächen angrenzenden Füllkörpern unterschiedlich ausgerichtet sind, vorzugsweise entgegengesetzt ausgerichtet sind. Hierdurch wird ein in die Anordnung in Richtung der Hauptausdehnungsfläche einströmendes Fluid innerhalb der Füllkörperanordnung zickzack-förmig umgelenkt.

Bei dem beschriebenen Füllkörper ist es durchaus möglich, dass das dritte Haltemittel und/oder das korrespondierende Gegenmittel gegenüber einer Seitenfläche des Füllkörpers und/oder das erste Haltemittel und/oder das zweite Haltemittel und/oder die korrespondierenden Gegenmittel gegenüber einer der Hauptausdehnungsflächen nach außen hervorsteht. Dadurch ist sichergestellt, dass bei miteinander verbundenen Füllkörpern die bevorzugte größtmögliche Offenheit und größtmögliche effektive Oberfläche gewährleistet ist, da nur kleine Teilbereiche der miteinander verbundenen Füllkörper aneinander anliegen, insbesondere die Außenstäbe nicht unmittelbar aneinander anliegen, so dass ein minimaler Druckverlust jeglicher Fluidströmung als auch bestmöglicher Stoff- und Wärmedurchtritt jeglicher Fluidströmung sichergestellt ist.

Bei dem beschriebenen Füllkörper ist es durchaus möglich, dass sich innenliegende Komponenten, vorliegend die Leitprofile, bis in den Bereich der Außenkontur erstrecken.

Eine Seitenfläche und/oder Hauptausdehnungsfläche des Füllkörpers kann durchaus mehrere Segmente aufweisen.

Es können somit mit dem vorgeschlagenen Füllkörper zwei unterschiedliche Einbauten, nämlich eine regellose Schüttung von Einzelfüllkörpern als auch eine geordnete bzw. "strukturierte Packung" und/oder ein Packungselement für eine "strukturierte Packung", verwirklicht werden.

Ein weiterer Vorteil des vorgeschlagenen Füllkörpers ist darin zu sehen, dass mit derart gestalteten Füllkörpern mittels Verbinden von mehreren Füllkörpern in einfacher Art und Weise eine Vielzahl von unterschiedlichen Füllkörperanordnungen mit unterschiedlichen Abmessungen und insbesondere unterschiedlichen Ausrichtungen der Innenstruktur, insbesondere der Leitprofile, verwirklicht werden kann. Derartige Anordnungen können wiederum in Form einer regellosen Schüttung verwendet werden, wodurch die Anordnungen in der regellosen Schüttung geordnete Bereiche bilden.

Weiterhin lässt sich mit dem vorgeschlagenen Füllkörper eine "strukturierte Packung" verwirklichen, die in einfacher Art und Weise und individuell an die geforderten Bedingungen, beispielsweise die Abmessungen der Kolonne oder geforderte Strömungsführung und/oder den geforderten Strömungswiderstand, anpassbar sind.

Der vorgeschlagene Füllkörper kann in einfacher Art und Weise hergestellt werden, beispielsweise mittels eines Spritzgussverfahrens.

Dadurch, dass sich mit dem gleichen Füllkörper unterschiedliche weitere Füllkörper sowie "strukturierte Packungen" und/oder Packungselemente für "strukturierte Packungen" mittels Verbinden der Füllkörper bilden lassen, werden Kosten für die Herstellung individueller Spritzgusswerkzeuge für unterschiedliche Füllkörpertypen oder Packungselemente, insbesondere aufwendige Spritzgusswerkzeuge für Füllkörper mit großen Abmessungen, sowie Kosten für die Lagerung und Vorhaltung unterschiedlicher Füllkörpertypen und/oder unterschiedlicher Packungselemente eingespart.

Weitere Merkmale der Erfindung sind in der nachfolgenden Beschreibung der Figuren sowie den Figuren selbst dargestellt, wobei bemerkt wird, dass alle Einzelmerkmale und alle Kombinationen von Einzelmerkmalen erfindungswesentlich sind.

In den Figuren ist die Erfindung anhand bevorzugter Ausführungsformen dargestellt, ohne hierauf beschränkt zu sein.

Die Figuren zeigen:
- Fig. 1: ein erstes Ausführungsbeispiel des Füllkörpers in einer perspektivischen Ansicht,
- Fig. 2: den Füllkörper gemäß Fig. 1 in einer Ansicht gemäß dem Pfeil II in Fig. 4,
- Fig. 3: den Füllkörper in einer Ansicht gemäß dem Pfeil III in Fig. 4,
- Fig. 4: den Füllkörper in einer Ansicht gemäß dem Pfeil IV in Fig. 2,
- Fig. 5: eine Anordnung von vier Füllkörpern gemäß Fig. 1 in einer Explosionsdarstellung,
- Fig. 6: einen aus einer Anordnung von mehreren miteinander verbundenen, identisch ausgebildeten Füllkörpern gebildeten Volumenkörper in einer Ansicht gemäß dem Pfeil VI in Fig. 7,
- Fig. 7: die Anordnung in einer Ansicht gemäß dem Pfeil VII in Fig. 6,
- Fig. 8: eine Schnittansicht der Anordnung gemäß der Linie VIII in Fig. 7,
- Fig. 9: eine Schnittansicht der Anordnung gemäß der Linie IX in Fig. 7,
- Fig. 10: eine Schnittansicht der Anordnung gemäß der Linie X in Fig. 6,
- Fig. 11: ein zweites Ausführungsbeispiel des Füllkörpers in einer perspektivischen Ansicht,
- Fig. 12: den Füllkörper gemäß Fig. 11 in einer Ansicht gemäß dem Pfeil XII in Fig. 14,
- Fig. 13: den Füllkörper in einer Ansicht gemäß dem Pfeil XIII in Fig. 14,
- Fig. 14: den Füllkörper in einer Ansicht gemäß dem Pfeil XIV in Fig. 13,
- Fig. 15: ein drittes Ausführungsbeispiel des Füllkörpers in einer perspektivischen Ansicht,
- Fig. 16: den Füllkörper gemäß Fig. 15 in einer Ansicht gemäß dem Pfeil XVI in Fig. 18,
- Fig. 17: den Füllkörper in einer Ansicht gemäß dem Pfeil XVII in Fig. 18,
- Fig. 18: den Füllkörper in einer Ansicht gemäß dem Pfeil XVIII in Fig. 17,
- Fig. 19: ein viertes Ausführungsbeispiel des Füllkörpers in einer perspektivischen Ansicht,
- Fig. 20: den Füllkörper gemäß Fig. 19 in einer Ansicht gemäß dem Pfeil XX in Fig. 22,
- Fig. 21: den Füllkörper in einer Ansicht gemäß dem Pfeil XXI in Fig. 22,
- Fig. 22: den Füllkörper in einer Ansicht gemäß dem Pfeil XXII in Fig. 21,
- Fig. 23: ein fünftes Ausführungsbeispiel des Füllkörpers in einer perspektivischen Ansicht,
- Fig. 24: den Füllkörper gemäß Fig. 23 in einer Ansicht gemäß dem Pfeil XXIV in Fig. 26,
- Fig. 25: den Füllkörper in einer Schnittansicht gemäß Linie XXV in Fig. 26,
- Fig. 26: den Füllkörper in einer Ansicht gemäß dem Pfeil XXVI in Fig. 24
- Fig. 27: ein sechstes Ausführungsbeispiel des Füllkörpers in einer perspektivischen Ansicht,
- Fig. 28: den Füllkörper gemäß Fig. 27 in einer Ansicht gemäß dem Pfeil XXVIII in Fig. 30,
- Fig. 29: den Füllkörper in einer Ansicht gemäß dem Pfeil XXIX in Fig. 30,
- Fig. 30: den Füllkörper in einer Ansicht gemäß dem Pfeil XXX in Fig. 29
- Fig. 31: ein siebtes Ausführungsbeispiel des Füllkörpers in einer perspektivischen Ansicht,
- Fig. 32: den Füllkörper gemäß Fig. 31 in einer Ansicht gemäß dem Pfeil XXXII in Fig. 33,
- Fig. 33: den Füllkörper in einer Ansicht gemäß dem Pfeil XXXIII in Fig. 32,
- Fig. 34: den Füllkörper in einer Schnittansicht gemäß der Linie XXXIV in Fig. 33.

Die jeweilige in den Figuren veranschaulichte Ausführungsform des Füllkörpers 1a findet mit einer Vielzahl entsprechender Füllkörper 1a Verwendung als Einzelfüllkörper in einer regellosen Schüttung, als miteinander verbundene Anordnung von mehreren, vorzugsweise identisch ausgebildeten Füllkörpern 1a, 1b, 1c, 1d in einer regellosen Schüttung oder als miteinander verbundene Füllkörper 1a als "strukturierte Packung" oder als Packungselement für eine "strukturierte Packung" Anwendung.

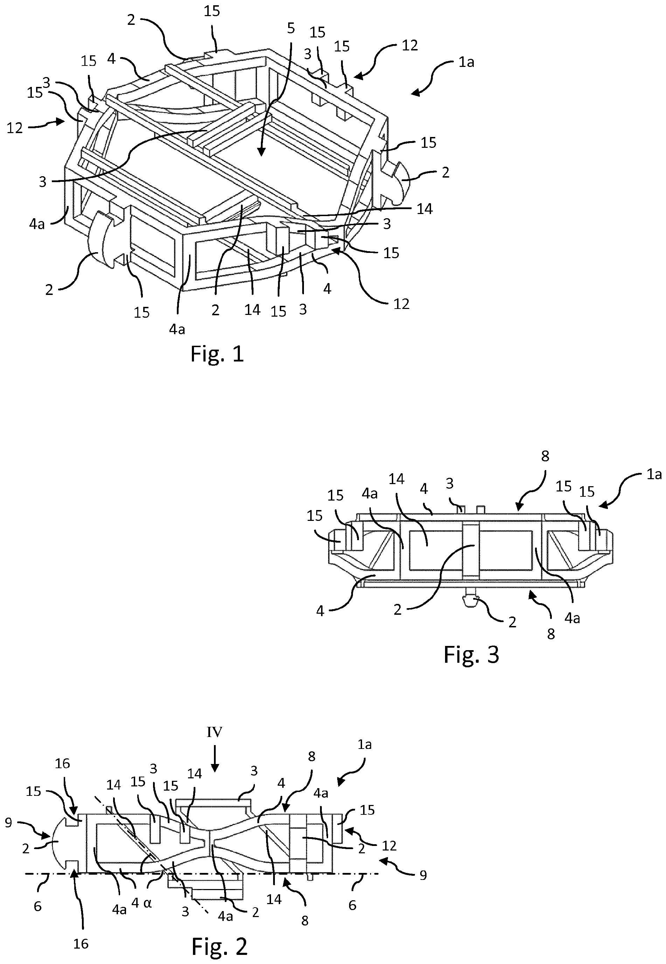

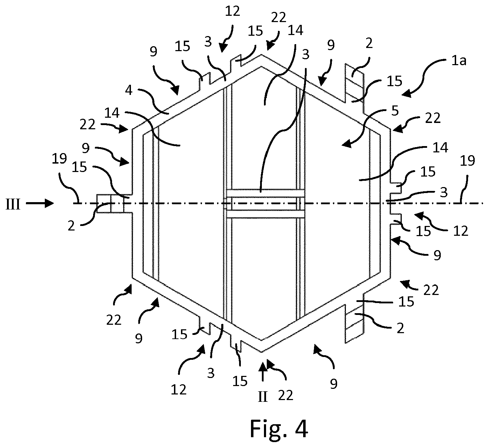

Die in den Fig. 1 bis 5 veranschaulichte Gestaltung eines ersten Ausführungsbeispiels des Füllkörpers 1a weist eine gitterförmige Außenstruktur 4, 4a auf, die durch Außenstäbe 4, 4a gebildet ist, wobei durch die Außenstruktur 4, 4a eine Außenkontur 8, 9 des Füllkörpers 1a mit zwei einander abgewandten Hauptausdehnungsflächen 8 und mit sechs an die Hauptausdehnungsflächen 8 angrenzenden Seitenflächen 9 gebildet ist.

Zwei der Außenstäbe 4, 4a sind als umlaufende Außenstäbe 4 ausgebildet, wobei der erste umlaufende Außenstab 4 die eine Hauptausdehnungsfläche 8 und der zweite umlaufende Außenstab 4 die andere Hauptausdehnungsfläche 8 umlaufend umschließt. Der jeweilige umlaufende Außenstab 4 weist nach außen gerichtete Kanten 22 auf und bildet die Form eines Sechsecks. Sechs andere Außenstäbe 4a der die Außenstruktur 4, 4a bildenden Außenstäbe 4, 4a erstrecken sich zwischen den Hauptausdehnungsflächen 8. Die sich zwischen den Hauptausdehnungsflächen 8 erstreckenden anderen Außenstäbe 4a sind jeweils im Übergangsbereich zwischen zwei Seitenflächen 9 und die umlaufenden Außenstäbe 4 im Übergangsbereich zwischen einer der beiden Hauptausdehnungsflächen 8 und den sechs Seitenflächen 9 ausgebildet. Die jeweilige Seitenfläche 9 und die jeweilige Hauptausdehnungsfläche 8 werden somit von den Außenstäben 4, 4a bzw. Teilbereichen der Außenstäbe 4, 4a umschlossen und bilden infolge dessen im wesentlichen offene Flächen, durch die ein einströmendes Medium mit geringem Strömungswiderstand in den Füllkörper 1a eindringen bzw. aus dem Füllkörper 1a austreten kann. Die sich zwischen den beiden Hauptausdehnungsflächen 8 erstreckenden anderen Außenstäbe 4a verbinden den ersten umlaufenden Außenstab 4 mit dem zweiten umlaufenden Außenstab 4, wodurch die Außenstruktur 4, 4a des Füllkörpers 1a eine hohe mechanischer Stabilität bei geringem Eigengewicht aufweist.

Dadurch, dass die Außenstruktur 4, 4a durch Außenstäbe 4, 4a gebildet ist weist der Füllkörper 1 eine gitterförmige Außenstruktur 4, 4a und somit eine sehr offene Außenkontur in beliebiger Raumrichtung auf, die einer Gas- und/oder Flüssigkeitsströmung einen geringen Widerstand entgegensetzt, wodurch der Druckverlust minimiert und ein Eindringen der einströmenden Fluide in das Füllkörperinnere und ein Ausströmen des Fluids aus dem Füllkörperinneren begünstigt wird.

Die durch die Außenstruktur 4, 4a gebildete Außenkontur des Füllkörpers 1 ist flach ausgebildet, wobei der erste umlaufende Außenstab 4 und der zweite umlaufende Außenstab 4 jeweils einen im Wesentlichen einander entgegengesetzt alternierenden Verlauf aufweisen.

Die Außenstruktur 4, 4a weist im Bereich der beiden Hauptausdehnungsflächen 8 jeweils sechs nach außen gerichtete Kanten 22 auf.

Eine Innenstruktur 5 weist drei Leitprofile 14 auf, wobei diese Leitprofile 14 identisch geneigt zu den Hauptausdehnungsflächen 8 ausgebildet sind.

Auf der Seite einer der Hauptausdehnungsflächen 8 ist durch die Außenstruktur 4, 4a eine Ebene 6 gebildet, wobei das Leitprofil 14 geneigt zu der Ebene 6 ausgebildet ist, wobei der Winkel α zwischen dem Leitprofil 14 und der Ebene 6 etwa 45° beträgt.

Der Füllkörper 1a weist mehrere von der Außenkontur 8, 9 nach außen hervorstehende Haltemittel 2 und mehrere zu den Haltemitteln 2 korrespondierende Gegenmittel 3 zum Herstellen einer Verbindung zwischen dem Füllkörper 1a und weiteren Füllkörpern 1b, 1c, 1d auf. Ein erstes Haltemittel 2 ist im Bereich einer ersten Seitenfläche 9 ausgebildet und in einen zweiten Füllkörper 1b einsteckbar, ein zweites Haltemittel 2 ist im Bereich einer zweiten Seitenfläche 9 ausgebildet und in einen dritten Füllkörper 1c einsteckbar und ein drittes Haltemittel 2 ist im Bereich einer der Hauptausdehnungsflächen 8 ausgebildet und in einen vierten Füllkörper 1d einsteckbar. Des Weiteren weist der Füllkörper 1a ein viertes Haltemittel 2 auf, das im Bereich einer dritten Seitenfläche 9 ausgebildet ist und in einen fünften Füllkörper einsteckbar ist.

Die im Bereich der Seitenflächen 9 ausgebildeten Haltemittel 2 sind jeweils in den umlaufenden Außenstäben 4 gelagert. Das im Bereich der einen Hauptausdehnungsfläche 8 ausgebildete Haltemittel 2 ist in der Innenstruktur 5 gelagert.

Im Bereich der übrigen Seitenflächen 9 und der anderen Hauptausdehnungsfläche 8 weist der Füllkörper 1a das zu dem jeweiligen Haltemittel 2 korrespondierendes Gegenmittel 3 auf, wobei das korrespondierende Gegenmittel 3 im Bereich der Seitenflächen 9 durch einen Teilbereich der Außenstruktur 4, 4a gebildet ist.

Die von den Seitenflächen 9 nach außen hervorstehenden Haltemittel 2 sind identisch ausgebildet. Ferner sind die dazu korrespondierenden Gegenmittel 3 identisch ausgebildet. Das dritte Haltemittel 2, das von der Hauptausdehnungsfläche 8 nach außen hervorstehend ausgebildet ist, ist unterschiedlich zu dem von der Seitenfläche 9 nach außen hervorstehenden Haltemittel 2 ausgebildet.

Sowohl die Hauptausdehnungsflächen 8 als auch die Seitenflächen 9 sind als Ebenen ausgebildet, wobei jeweils gegenüberliegende Seitenflächen 9 und die beiden gegenüberliegenden Hauptausdehnungsflächen 8 jeweils zueinander parallel ausgebildet sind.

Die Außenkontur 8, 9 des Füllkörpers 1a weist die Form eines geraden regulären Prismas mit einer sechseckigen Grundfläche auf, wobei die Hauptflächen 8 die Grundfläche und eine Deckfläche des Prismas bilden.

Der Füllkörper 1a ist flach ausgebildet, wobei die Länge und die Breite des Füllkörpers 1a jeweils etwa das 3,5-fache der Höhe des Füllkörpers 1a beträgt, wobei die Höhe des Füllkörpers 1a die Abmessung des Füllkörpers 1a von der einen Hauptausdehnungsfläche 8 in Richtung der anderen Hauptausdehnungsfläche 8 ist.

Die Außenkontur 8, 9 und die Gesamtheit der Haltemittel 2 und Gegenmittel 3 sind spiegelsymmetrisch zu einer Symmetrieebene 19 des Füllkörpers 1a ausgebildet, wobei sich diese Symmetrieebene 19 im Wesentlichen senkrecht zu den beiden Hauptausdehnungsflächen 8 erstreckt.

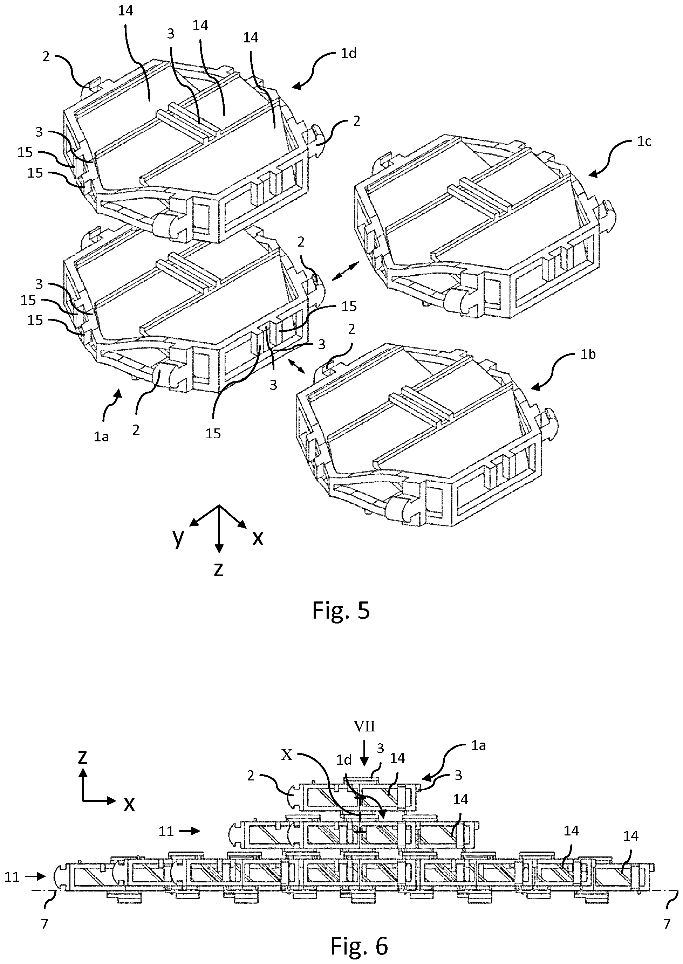

Wie in der Explosionsdarstellung in Fig. 5 dargestellt, ist das erste Haltemittel 2 des Füllkörpers 1a in einer ersten Raumrichtung X in einen zweiten Füllkörper 1b einsteckbar, das zweite Haltemittel 2 entlang einer zweiten Raumrichtung Y in einen dritten Füllkörper 1c einsteckbar und das dritte Haltemittel 2 entlang einer dritten Raumrichtung Z in einen vierten Füllkörper 1d einsteckbar, wobei die Raumrichtungen X, Y, Z jeweils senkrecht zu den beiden anderen Raumrichtungen X, Y, Z ausgebildet sind.

Die in der Fig. 5 dargestellten vier Füllkörper 1a, 1b, 1c, 1d sind identisch ausgebildet und identisch ausgerichtet. Die Haltemittel 2 sind jeweils in die korrespondierende Gegenmittel 3 der zu verbindenden Füllkörper 1a, 1b, 1c, 1d einsteckbar.

Der Füllkörper 1a weist von der Außenkontur 8, 9 nach außen hervorstehende Abstandshalter 15 auf, wobei die im Bereich der Seitenflächen 9 ausgebildeten Haltemittel 2 den Abstandshalter 15 aufweisen. Im Bereich der Hauptausdehnungsfläche 8 ist der Abstandshalter 15 durch das Gegenmittel 3 gebildet.

Ferner weisen die Seitenflächen 9 des Füllkörpers 1a, die kein Haltemittel 2 aufweisen, zwei parallel verlaufende Vorsprünge auf, wobei diese Vorsprünge sowohl als Abstandshalter 15 als auch als eine Positionierhilfe 12 für das Haltemittel 2 dienen. Zwecks Verbinden von zwei Füllkörpern 1a, 1b, 1c im Bereich der Seitenflächen 9 wird das Haltemittel 2 zunächst in die beiden Vorsprünge eingebracht und anschließend in Richtung des zu verbindenden Füllkörpers 1b, 1c verschoben, wobei die beiden Vorsprünge das Haltemittel 2 beim Verschieben der Füllkörper 1a, 1b, 1c zueinander führen und im verbundenen Zustand der Füllkörper 1a, 1b, 1c ein Verschieben der Füllkörper 1a, 1b, 1c senkrecht zur Einsteckrichtung verhindern.

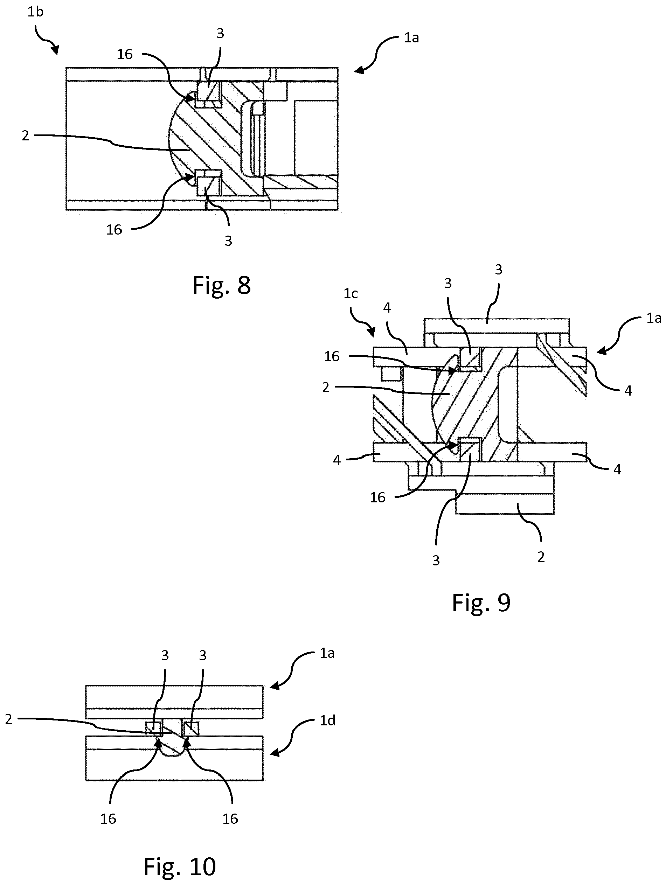

Die Haltemittel 2 des Füllkörpers 1a sind als Clip ausgebildet, wobei das Haltemittel 2 senkrecht zur Einsteckrichtung zwei gegenüberliegende Ausnehmungen 16 aufweist. Zwecks Verbinden des Füllkörpers 1a mit den weiteren Füllkörpern 1b, 1c, 1d werden die Füllkörper 1a, 1b, 1c, 1d in Richtung des jeweiligen Haltemittels 2 zueinander verschoben, wobei beim Kontaktieren des Haltemittels 2 und des Gegenmittels 3 das Gegenmittel 3 entlang der rampenartigen Außenfläche des Haltemittels 2 elastisch verformt wird, vorliegend Teilbereiche der zwei gegenüberliegenden umlaufenden Außenstäbe 4 der Außenstruktur 4, 4a, die das Gegenmittel 3 bilden, auseinandergebogen werden. Wie in den Figuren 8 bis 10 dargestellt, sind die das Gegenmittel 3 bildenden umlaufenden Außenstäbe 4 nach Überwindung der Rampe in den Ausnehmungen 16 angeordnet, wobei ein Teilbereich des Haltemittels 2, der die Rampe aufweist, den jeweiligen umlaufenden Außenstab 4 auf der dem Füllkörper 1a abgewandten Seite hintergreift, wodurch eine Rastverbindung zwischen den beiden Füllkörpern 1a, 1b, 1c, 1d gebildet ist.

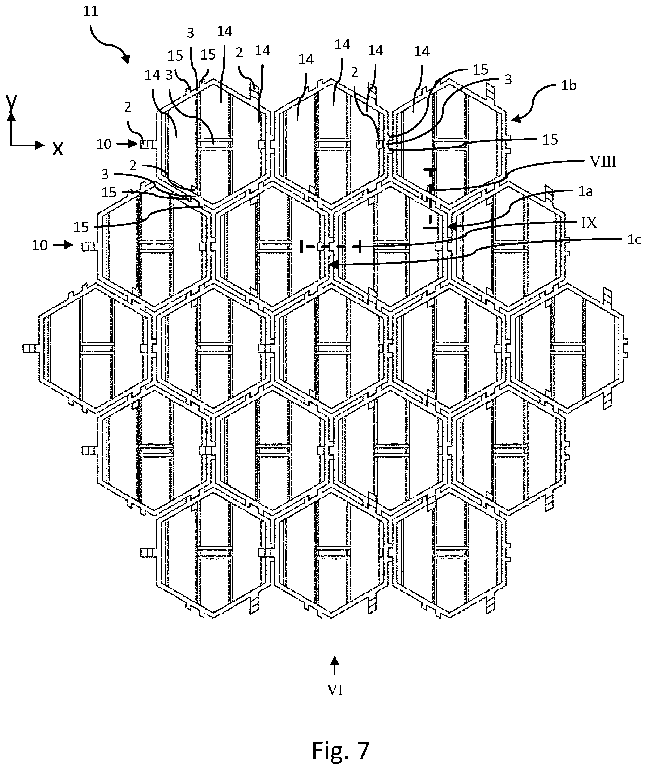

Eine Anordnung von identisch ausgebildeten Füllkörpern 1a, 1b, 1c, 1d ist in den Fig. 6 und 7 gezeigt, wobei sich die Füllkörper 1a von der ersten Ausführungsform lediglich dadurch unterscheiden, dass alle Seitenflächen 9 rechteckig ausgebildet sind. Die Außenkontur 8, 9 des jeweiligen Füllkörpers 1a, 1b, 1c, 1d ist in der Art eines geraden regulären Prismas mit einer sechseckigen Grundfläche ausgebildet. Dabei ist der jeweilige Füllkörper 1a, 1b, 1c, 1d im Bereich jeder Seitenfläche 9 und jeder Hauptausdehnungsfläche 8 mit einem weiteren Füllkörper 1a, 1b, 1c, 1d verbindbar.

Im Folgenden ist zu beachten, dass ein Füllkörper 1a, 1b, 1c, 1d der Anordnung abhängig davon, welche an den jeweiligen Füllkörper 1a, 1b, 1c, 1d angrenzende Füllkörper 1a, 1b, 1c, 1d berücksichtigt werden, dieser Füllkörper 1a, 1b, 1c, 1d entweder den Füllkörper 1a, den zweiten Füllkörper 1b, den dritten Füllkörper 1c oder den vierten Füllkörper 1d bildet.

Die Anordnung weist zwei aneinander angrenzende flächige Lagen 11 von Füllkörpern 1a, 1b, 1c auf, wobei eine flächige Lage 11 dadurch gebildet ist, dass die Füllkörper 11 im Bereich aneinander angrenzender Seitenflächen 9 mittels der in die Gegenmittel 3 eingesteckten Haltemittel 2 miteinander verbunden sind, wobei die Ebenen 6 der angeordneten Füllkörper 1a, 1b, 1c einer flächigen Lage 11 in derselben Ebene 7 angeordnet sind. Durch das Verbinden der Füllkörper 1a, 1b, 1c, 1d im Bereich der Seitenflächen 9 und Hauptausdehnungsflächen 8 ist eine geordnete Packung von Füllkörpern 1a, 1b, 1c, 1d geschaffen, die eine "strukturierte Packung" oder ein Packungselement für eine "strukturierte Packung" bildet.

Die Füllkörper 1a, 1b, 1c der jeweiligen Lage 11 und die Füllkörper 1a, 1b, 1c unterschiedlicher Lagen 11 sind identisch ausgerichtet. Die aneinander angrenzenden Lagen 11 sind jeweils mittels der dritten Haltemittel 2 miteinander verbunden.

Eine detaillierte Ansicht des Zusammenwirkens des ersten Haltemittels 2, des zweiten Haltemittels 2 und des dritten Haltemittels 2 mit dem jeweiligen Gegenmittel 3 eines verbundenen Füllkörpers 1a, 1b, 1c, 1d zeigen die Fig. 8 bis 9 in einer Schnittansicht.

Zwecks Bildung einer flächigen Lage 11 ist es durchaus denkbar, dass mehrere Füllkörper 1a, 1b mittels der ersten Haltemittel 2 zunächst in einem ersten Schritt in der ersten Raumrichtung X ineinandergesteckt werden zwecks Bildung einer ersten Reihe 10 von Füllkörpern 1a, 1b in einem zweiten Schritt auf die gleiche Weise eine zweite Reihe 10 von Füllkörpern 1a, 1b gebildet wird und anschließend in einem dritten Schritt die zwei Reihen 10 von Füllkörpern 1a, 1b parallel zueinander ausgerichtet und anschließend in der zweiten Raumrichtung Y zueinander verschoben werden, wobei durch das Verschieben das zweite Haltemittel 2 des jeweiligen Füllkörpers 1a, 1b einer Reihe 10 in die Füllkörper 1a, 1b der anderen Reihe eingesteckt wird und die beiden Reihen 10 auf diese Weise miteinander verbunden werden, wobei die Füllkörper 1a, 1b einer Reihe 10 für den jeweiligen Füllkörper 1a, 1b der anderen Reihe 10 den dritten Füllkörper 1c bilden.

Dieses Verfahren zum Verbinden der Füllkörper 1a, 1b, 1c zu einer flächigen Lage 11 wird dadurch erleichtert, dass das erste Haltemittel 2 und das zweite Haltemittel 2 zueinander orthogonal ausgebildet sind.

Im Anschluss an die Bildung von mehreren flächigen Lagen 11 von Füllkörpern 1a, 1b, 1c können diese flächigen Lagen 11 mittels des dritten Haltemittels 2 miteinander verbunden werden, wobei die Füllkörper 1a, 1b, 1c einer Lage 11 für den jeweiligen Füllkörper 1a, 1b, 1c der anderen Lage 11 den vierten Füllkörper 1d bilden.

Wie den Fig. 7 und 8 zu entnehmen ist, ist durch die Abstandshalter 15 sichergestellt, dass die aneinander angrenzenden Seitenflächen 9 zweier benachbarter Füllkörper 1a, 1b, 1c bzw. die aneinander angrenzenden Hauptausdehnungsflächen 8 benachbarter Füllkörper 1a, 1d nicht unmittelbar aneinander anliegen. Dadurch ist eine größtmögliche effektive Oberfläche der Anordnung sichergestellt.

Bei der in den Fig. 6 und 7 dargestellten Anordnung sind die Leitprofile 14 innerhalb einer Lage 11 und die Leitprofile 14 unterschiedlicher Lagen 11 identisch geneigt ausgebildet, sodass ein in Z-Richtung in die Anordnung einströmendes Fluid innerhalb der Anordnung in die negative X-Richtung umgelenkt wird.

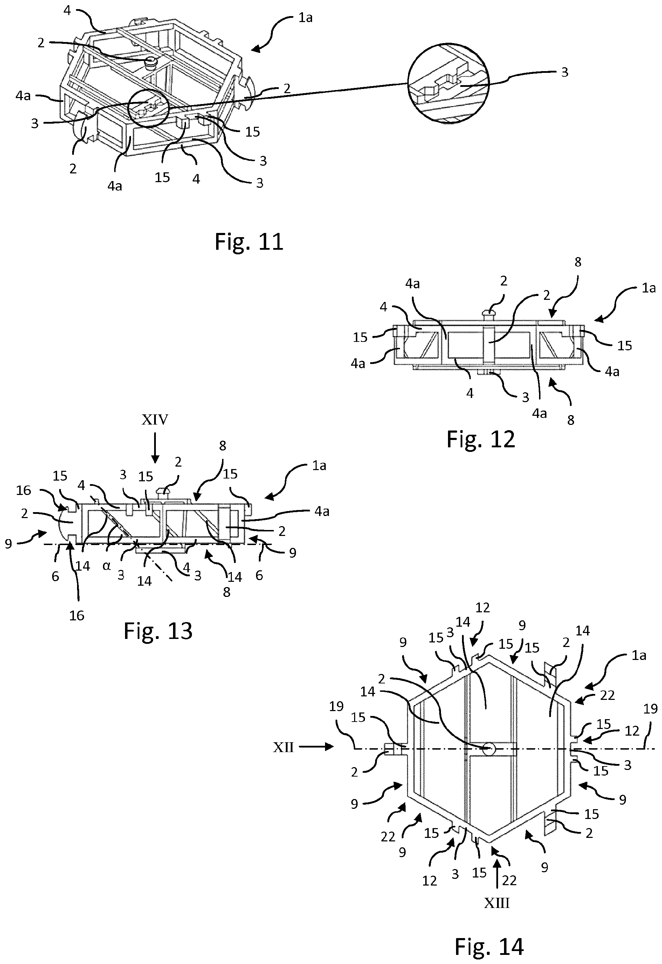

Die Fig. 11 bis 14 zeigen ein zweites Ausführungsbeispiel des Füllkörpers 1a, wobei sich dieses Ausführungsbeispiel von dem ersten Ausführungsbeispiel im Wesentlichen dadurch unterscheidet, dass die Seitenflächen 9 als rechteckige ebene Flächen ausgebildet sind. Des Weiteren ist das dritte Haltemittel 2 des Füllkörpers 1a rotationssymmetrisch ausgebildet, wobei das dritte Haltemittel 2 an einem der Hauptausdehnungsfläche 8 abgewandten Ende einen Vorsprung aufweist. Das zu dem dritten Haltemittel 2 korrespondierende Gegenmittel 3, welches im Bereich der anderen Hauptausdehnungsfläche 8 ausgebildet ist, weist eine im Wesentlichen quadratische Durchgangsöffnung zur Aufnahme des dritten Haltemittels 2 auf. Wie insbesondere der Detailansicht in der Fig. 11 zu entnehmen ist, ist die Durchgangsöffnung dabei durch zwei nachgiebige Streben gebildet.

Diese Gestaltung des dritten Haltemittels 2 und des dazu korrespondierenden Gegenmittels 3 ermöglicht es, zwei Füllkörper 1a, 1d in unterschiedlichen Ausrichtungen zueinander miteinander zu verbinden. Zudem gewährleistet diese Gestaltung, dass bei miteinander verbundenen Füllkörpern 1a, 1d das dritte Haltemittel 2 drehbar in dem Gegenmittel 3 und somit drehbar in dem vierten Füllkörper 1d gelagert ist, wodurch die Ausrichtung der beiden Füllkörper 1a, 1d zueinander auch nach dem Verbinden der Füllkörper 1a, 1d variiert werden kann.

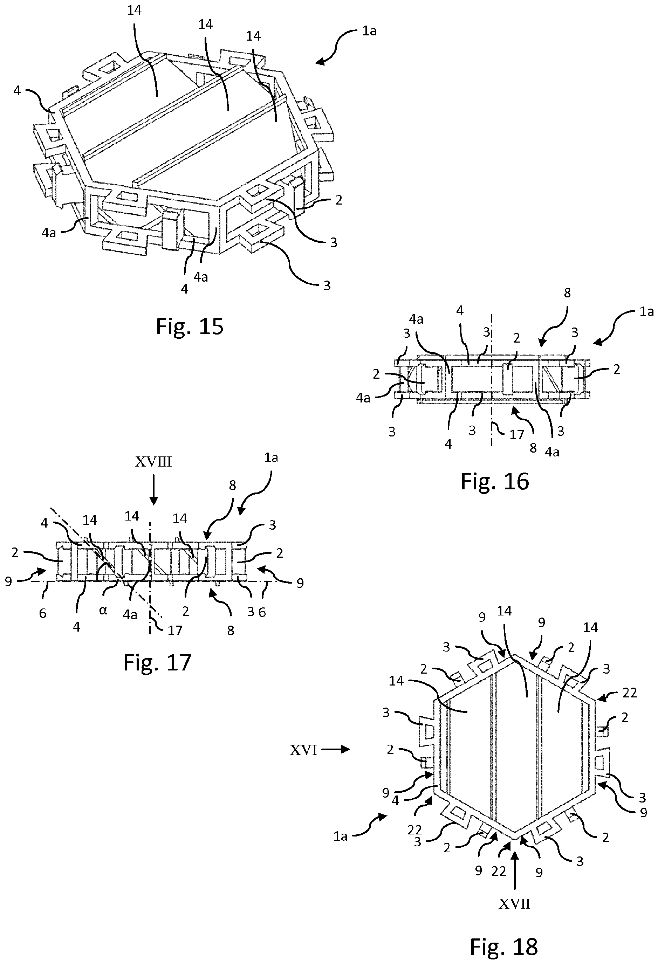

Ein in den Fig. 15 bis 18 dargestelltes drittes Ausführungsbeispiel des Füllkörpers 1a unterscheidet sich von den vorigen Ausführungsbeispielen im Wesentlichen dadurch, dass dieses Ausführungsbeispiel kein drittes Haltemittel 2 und entsprechend auch kein zu dem dritten Haltemittel 2 korrespondierendes Gegenmittel 3 aufweist.

Dementsprechend ist ein derart gestalteter Füllkörper 1a mit weiteren, vorzugsweise identisch gestalteten Füllkörpern 1b, 1c lediglich in zwei Raumrichtungen X, Y verbindbar. Der Füllkörper 1a weist an jeder der sechs Seitenflächen 9 ein Haltemittel 2 und ein Gegenmittel 3 auf, wobei die Haltemittel 2 und die Gegenmittel 3 jeweils identisch und im Wesentlichen orthogonal zu der jeweiligen Seitenfläche 9 ausgebildet sind. Die Außenkontur 8, 9 und die Gesamtheit der Haltemittel 2 und Gegenmittel 3 sind radiärsymmetrisch zu einer Symmetrieachse 17 des Füllkörpers 1a ausgebildet, wobei sich diese Symmetrieachse 17 von der einen Hauptausdehnungsfläche 8 in Richtung der anderen Hauptausdehnungsfläche 8 erstreckt.

Aufgrund der identischen Gestaltung der Haltemittel 2 und Gegenmittel 3 sowie der 6-fachen Radiärsymmetrie ist jede der sechs Seitenflächen 9 des Füllkörpers 1a mit jeder der sechs Seitenflächen 9 eines identisch gestalteten Füllkörpers 1b verbindbar, wodurch eine Vielzahl von unterschiedlichen Ausrichtungen der beiden Füllkörper 1a, 1b zueinander verwirklicht werden kann.

Im Gegensatz zu den vorigen Ausführungsbeispielen ist das Gegenmittel 3 nicht durch einen Teilbereich der Außenstruktur 4, 4a gebildet, sondern durch zwei von der Seitenfläche 9 nach außen hervorstehende Vorsprünge, die jeweils eine Durchgangsöffnung für einen Vorsprung des korrespondierenden Haltemittels 2 aufweisen, wodurch beim Einstecken des Haltemittels 2 des Füllkörpers 1a in das Gegenmittel 3 des zu verbindenden Füllkörpers 1b eine rastierende Verbindung verwirklicht wird.

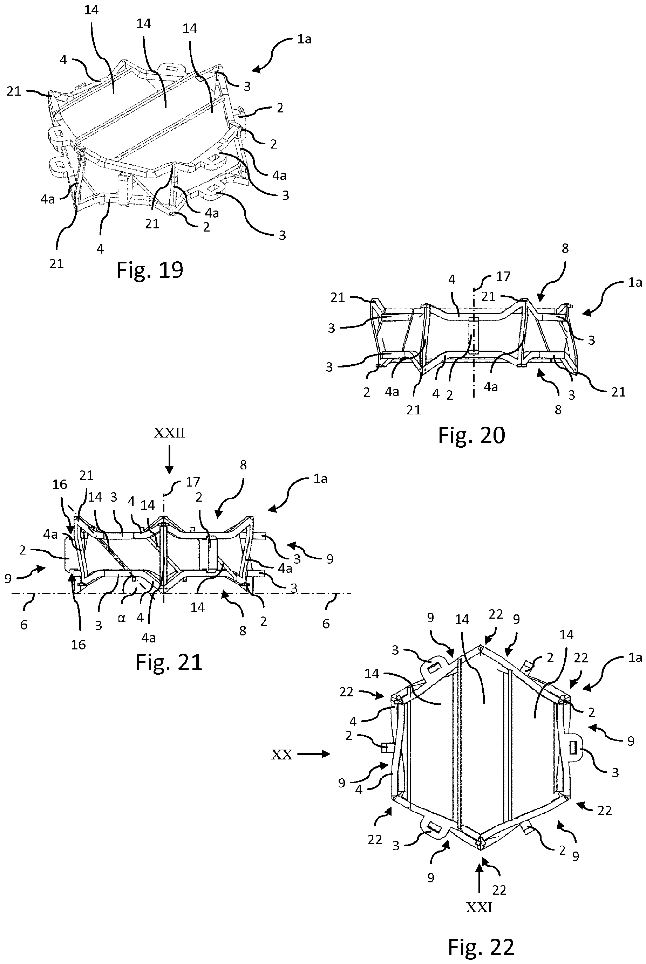

Die Fig. 19 bis 22 zeigen ein viertes Ausführungsbeispiel der Erfindung, wobei sich dieses Ausführungsbeispiel dadurch auszeichnet, dass drei der sechs Seitenflächen 9 das Haltemittel 2 und die drei anderen Seitenflächen 9 das korrespondierende Gegenmittel 3 aufweisen, wobei die Haltemittel 2 und die Gegenmittel 3 jeweils identisch ausgebildet sind. Dabei weisen die an die Seitenfläche mit Haltemittel 2 angrenzenden Seitenflächen 9 jeweils das Gegenmittel 3 auf. Der Füllkörper 1a weist ferner eine 3-fache Radiärsymmetrie auf.

Im Gegensatz zu den vorigen Ausführungsbeispielen sind die Hauptausdehnungsflächen 8 und die Seitenflächen 9 nicht eben, sondern gekrümmt ausgebildet. Weiterhin weist die Außenstruktur 4, 4a im Bereich der beiden Hauptausdehnungsflächen 8 wiederum jeweils sechs nach außen gerichtete Kanten 22 auf.

Der erste umlaufende Außenstab 4 und der zweite umlaufende Außenstab 4 weisen jeweils einen im Wesentlichen einander entgegengesetzt alternierenden Verlauf auf, wodurch in einem Randbereich der einen Hauptausdehnungsfläche 8 und in einem Randbereich der anderen Hauptausdehnungsfläche 8 mehrere im Wesentlichen gegenüberliegende nach außen hervorstehende Teilbereiche 21 gebildet sind.

Die hervorstehenden Teilbereiche 21 sind dabei jeweils im Bereich einer der nach außen gerichteten Kanten 22 ausgebildet, wobei in einer Aufsichtsprojektion zwei in Projektionsrichtung gegenüberliegende Kanten 22, folglich eine Kante 22 der einen Hauptausdehnungsfläche 8 und eine Kante 22 der anderen Hauptausdehnungsfläche 8, zueinander versetzt ausgebildet sind, wie insbesondere der Fig. 22 zu entnehmen ist.

Diese gegenüberliegenden Kanten 22 bzw. die dort ausgebildeten Teilbereiche 21 sind jeweils mit einem der sich zwischen den beiden Hauptausdehnungsflächen 8, erstreckenden anderen Außenstäbe 4a miteinander verbunden.

Der Füllkörper 1a weist im Bereich der jeweiligen Hauptausdehnungsfläche 8 drei identisch ausgebildete dritte Haltemittel 2 und drei identisch ausgebildete dritte Gegenmittel 3 zum Verbinden mit einem dritten Füllkörper 1d auf. Diese dritten Haltemittel 2 und Gegenmittel 3 sind abwechselnd in den hervorstehenden Teilbereichen 21 des die entsprechende Hauptausdehnungsfläche 8 umlaufend umschließenden Außenstabs 4 ausgebildet, wobei einem dritten Haltemittel 2 der einen Haupausdehnungsfläche 8 ein drittes Gegenmittel 3 der anderen Hauptausdehnungsfläche 8 gegenüberliegt.

Das dritte Haltemittel 2 ist dabei in dem jeweiligen umlaufenden Außenstab 4 als Vorsprung und das dritte Gegenmittel 3 als Rücksprung ausgebildet.

Diese Ausführungsform ermöglicht es, einen derart gestalteten Füllkörper 1a in der dritten Raumrichtung Z in drei unterschiedlichen Ausrichtungen mit einem dritten derartigen Füllkörper 1d zu verbinden, wobei das jeweilige dritte Haltemittel 2 des einen Füllkörpers 1a mit jeweils einem dritten Gegenmittel 3 des zu verbindenden Füllkörpers 1d in Eingriff kommt. Dadurch ist die Verbindung in der dritten Raumrichtung Z besonders stabil.

Dadurch, dass die dritten Haltemittel 2 und dritten Gegenmittel 3 in einem im Bereich der Kanten 22 hervorstehenden Teilbereich 21 ausgebildet und die Kanten 22 in Projektionsrichtung zueinander versetzt ausgebildet sind, ist ein Verbinden und ein Lösen derartiger Füllkörper 1a, 1d in der dritten Raumrichtung Z in besonders einfacher Art und Weise möglich und dennoch eine stabile Verbindung zwischen den Füllkörpern 1a, 1d gewährleistet.

Zwecks Verbindens der zwei Füllkörper 1a, 1d können zunächst ein drittes Haltemittel 2 und ein benachbartes drittes Gegenmittel 3 des einen Füllkörpers 1a in jeweils ein drittes Gegenmittel 3 und ein benachbartes drittes Haltemittel 2 des zu verbindenden Füllkörpers 1d eingehakt werden. Anschließend werden die beiden Füllkörper 1a, 1d in Richtung des jeweils anderen Füllkörpers 1a, 1d gedrückt, wobei aufgrund der Führung durch die bereits verhakten Haltemittel 2 und Gegenmittel 3 quasi ein Verschwenken um eine durch die verhakten Haltemittel 2 und Gegenmittel 3 gebildete Achse erfolgt. Aufgrund der Elastizität der Außenstäbe 4, 4a und/oder Haltemittel 2 und/oder Gegenmittel 3 kommen die übrigen Haltemittel 2 mit den übrigen Gegenmitteln 3 in Eingriff und rastieren.

Ein Lösen der Verbindung kann dadurch erfolgen, dass einer der Füllkörper 1a, 1d im Bereich eines hervorstehenden Haltemittels 2 zusammengedrückt wird, wodurch dieses Haltemittel 2 und das korrespondierende Gegenmittel 3 außer Eingriff gebracht werden und anschließend die Füllkörper 1a, 1d voneinander weg bewegt werden, wodurch sich auch die übrigen Haltemittel 2 von den übrigen Gegenmitteln 3 lösen.

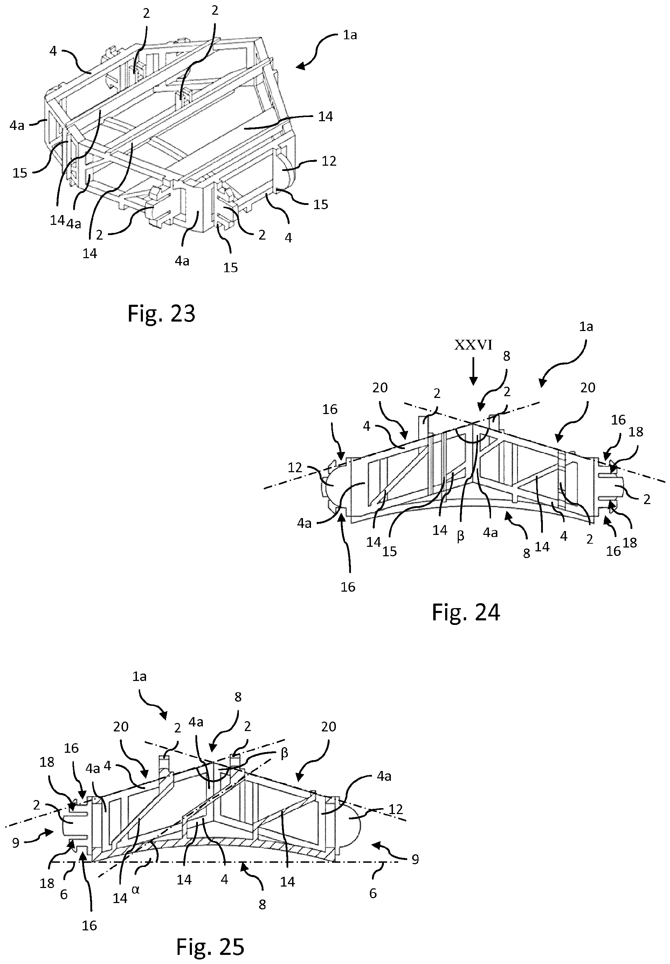

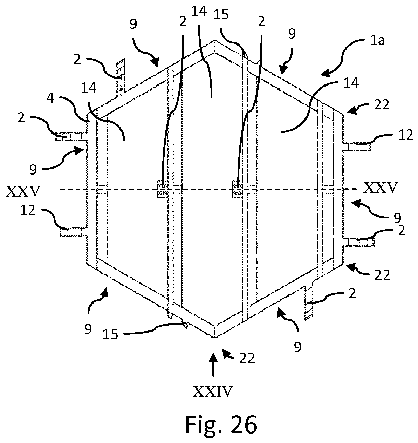

Ein in den Fig. 23 bis 26 dargestelltes fünftes Ausführungsbeispiel des Füllkörpers 1a ist im Wesentlichen flach ausgebildet, wobei die beiden gegenüberliegenden Hauptausdehnungsflächen 8 gleichsinnig gekrümmt ausgebildet sind. Dabei ist eine der Hauptausdehnungsflächen 8 durch zwei zueinander gewinkelt angeordnete, im Wesentlichen jeweils eben ausgebildete Segmente 20 gebildet, wobei die beiden Segmente 20 einen stumpfen Winkel β von etwa 145° einschließen.

Die an den Seitenflächen 9 ausgebildeten, identisch gestalteten vier Haltemittel 2 weisen jeweils zwei gegenüberliegende Ausnehmungen 16 zum rastierenden Einstecken in den zu verbindenden Füllkörper 1b, 1c auf. Weiterhin weisen die Haltemittel 2 jeweils zwei sich von einem der Seitenfläche 9 abgewandten Ende des jeweiligen Haltemittels 2 in Richtung der Seitenfläche 9 erstreckende Schlitze 18 auf. Diese beiden Schlitze 18 gewährleisten, dass beim Einführen des Haltemittels 2 in den zu verbindenden Füllkörper 1b, 1c sich der jeweilige Teilbereich, der die eine Ausnehmung 16 aufweist, in Richtung des Teilbereichs, der die andere Ausnehmung 16 aufweist verformt, wodurch der Abstand der beiden Teilbereiche und somit der Abstand der beiden Ausnehmungen 16 verringert. Dadurch wird das Einführen des Haltemittels 2 des Füllkörpers 1a in den zu verbindenden Füllkörper 1b, 1c erleichtert.

Der Füllkörper 1a weist zudem im Bereich zweier einander abgewandter Seitenflächen 9 jeweils eine Positionierhilfe 12 auf. Die Positionierhilfe 12 ist im Wesentlichen flach und halbkreisförmig sowie von der jeweiligen Seitenfläche 9 nach außen hervorstehend ausgebildet. Der Durchmesser des Halbkreises ist geringfügig kleiner als der Abstand zweier gegenüberliegender Längsstäbe, die an der Außenstruktur 4, 4a angeordnet sind. Beim Verbinden des Füllkörpers 1a mit einem Füllkörper 1b, 1c wird die Positionierhilfe 12 im Bereich der Seitenfläche 9 des zu verbindenden Füllkörpers 1b, 1c zwischen die Längsstäbe der Außenstruktur 4, 4a in den Füllkörper 1b, 1c eingeschoben, wodurch die Positionierung der beiden Füllkörper 1a, 1b, 1c zueinander erleichtert ist.

Der Füllkörper 1a weist mehrere Abstandshalter 15 auf, wobei der Füllkörper 1a sowohl separat ausgebildete Abstandshalter 15 als auch in den Haltemitteln 2 und den Positionierhilfen 12 ausgebildete Abstandshalter 15 aufweist.

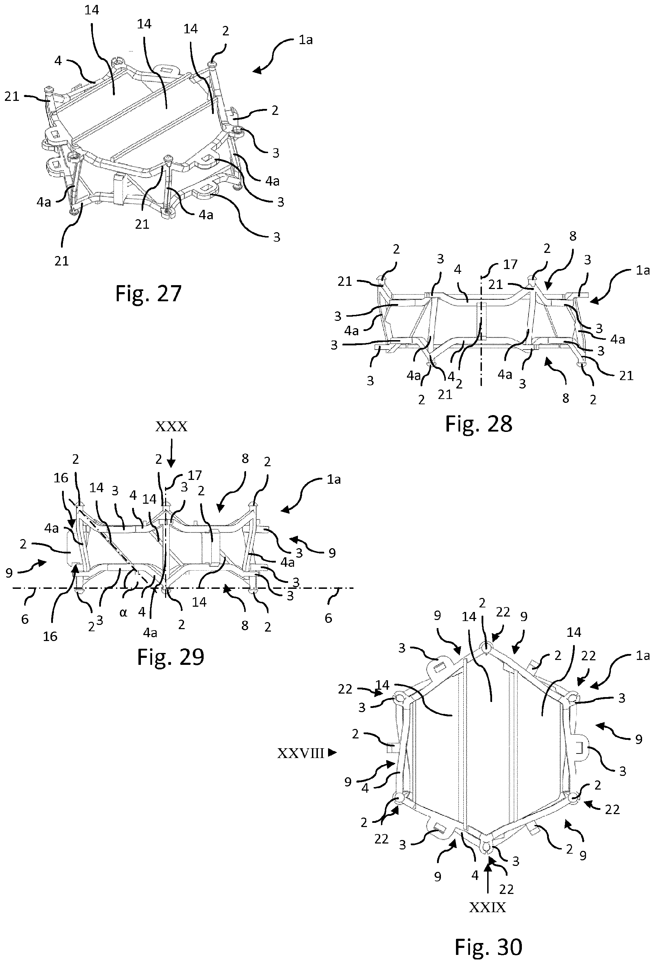

Ein in den Fig. 27 bis 30 dargestelltes sechstes Ausführungsbeispiel des Füllkörpers 1a unterscheidet sich von dem vierten Ausführungsbeispiel im Wesentlichen durch die Gestaltung der dritten Haltemittel 2 und der dritten Gegenmittel 3.

Diese dritten Haltemittel 2 und drittenGegenmittel 3 sind ähnlich zu denen des vierten Ausführungsbeispiels jeweils in einem Kontaktierungsbereich von zwei Seitenflächen 9 und einer der Hauptausdehnungsflächen 8, folglich im Bereich der Kanten 22 bzw. dem dort ausgebildeten, hervorstehenden Teilbereiche 21 ausgebildet. Das jeweilige Haltemittel 2 steht gegenüber der jeweiligen Hauptausdehnungsfläche 8 hervor und weist an einem der Hauptausdehnungsfläche 8 abgewandten Ende einen Vorsprung auf.

Die zu dem dritten Haltemittel 2 korrespondierenden Gegenmittel 3 stehen jeweils gegenüber einer jeweiligen Seitenfläche 9 nach außen hervor und weisen eine Durchgangsöffnung zum rastierenden Einstecken des dritten Haltemittels 2 auf.

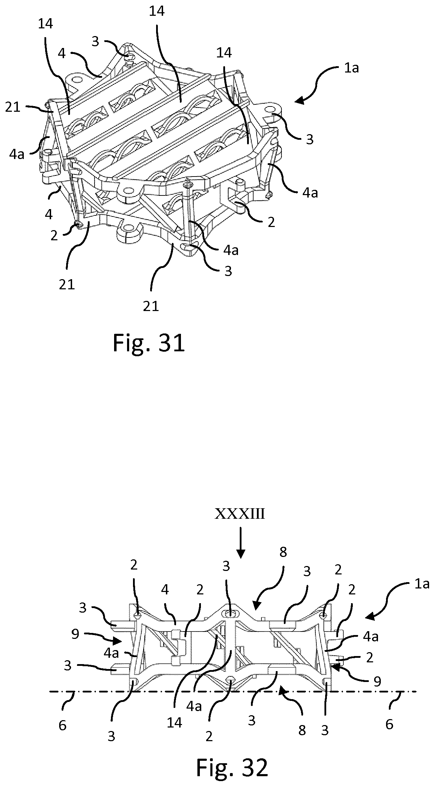

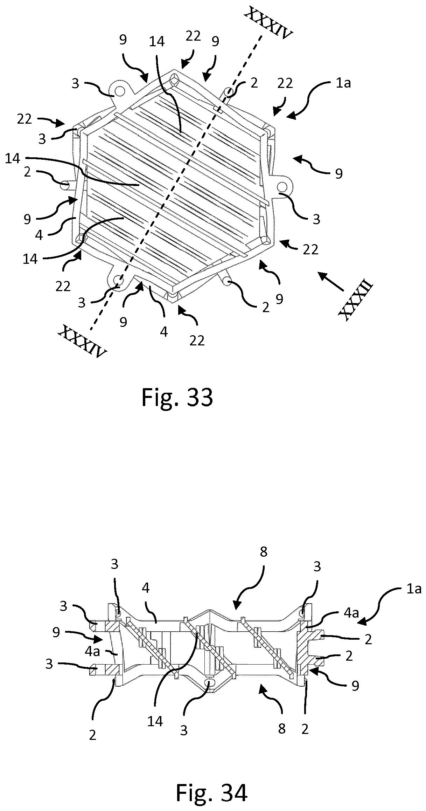

Ein in den Fig. 31 bis 34 dargestelltes siebtes Ausführungsbeispiel unterscheidet sich von dem vierten Ausführungsbeispiel im Wesentlichen dadurch, dass das erste und zweite Haltemittel 2 durch jeweils zwei gegenüberliegende sich nach außen erstreckende Stäbe gebildet ist, wobei der jeweilige Stab eine Rastnase aufweist. Dadurch wird eine Verformung dieser Haltemittel 2 beim Einstecken in die Gegenmittel 3 erleichtert.

Das dritte Haltemittel 2 ist als hervorstehende Rastnase ausgebildet. Das korrespondierende Gegenmittel 3 wird vorliegend durch einen Hohlraum bzw. ein Loch an der entsprechenden Position und zwar im Bereich des Vorsprungs bzw. der Kante, d.h. den entsprechenden Knotenpunkten des umlaufenden Außenstabs 4 und des anderen Außenstabs 4a, gebildet.

Zudem weist das jeweilige Leitprofil 14 mehrere Durchtrittsöffnungen auf, wobei die jeweilige Durchtrittsöffnung durch Herausbiegen eines Teilbereichs des Leitprofils 14 gebildet ist.

### Bezugszeichenliste

- 1a: Füllkörper
- 1b: zweiter Füllkörper
- 1c: dritter Füllkörper
- 1d: vierter Füllkörper
- 2: Haltemittel
- 3: Gegenmittel
- 4: umlaufender Außenstab
- 4a: anderer Außenstab
- 5: Innenstruktur
- 6: Ebene des Füllkörpers
- 7: Ebene
- 8: Hauptausdehnungsfläche
- 9: Seitenfläche
- 10: Reihe
- 11: Lage
- 12: Positionierhilfe
- 13: Verbindungselement
- 14: Leitprofil
- 15: Abstandshalter
- 16: Ausnehmung
- 17: Symmetrieachse
- 18: Schlitz
- 19: Symmetrieebene
- 20: Segment
- 21: hervorstehender Teilbereich
- 22: Kante
- X: erste Raumrichtung
- Y: zweite Raumrichtung
- Z: dritte Raumrichtung
- α: Winkel
- β: Winkel

## Patentansprüche

1. Füllkörper (1a), der von einer Gas- und/oder Flüssigkeitsströmung durchsetzbar ist, insbesondere zur Verwendung für Stoff- und/oder Wärmeaustauschkolonnen, aufweisend eine Außenstruktur (4, 4a), wobei die Außenstruktur (4, 4a) durch Außenstäbe (4, 4a) gebildet ist, eine Innenstruktur (5), ein erstes Haltemittel (2) zum Herstellen einer Verbindung zwischen dem Füllkörper (1a) und einem zweiten Füllkörper (1b) sowie aufweisend ein zweites Haltemittel (2) zum Herstellen einer Verbindung zwischen dem Füllkörper (1a) und einem dritten Füllkörper (1c), wobei das jeweilige Haltemittel (2) in den jeweiligen Füllkörper (1b, 1c) einsteckbar ist, **dadurch gekennzeichnet, dass** durch die Außenstruktur (4, 4a) eine Außenkontur (8, 9) mit zwei einander abgewandten Hauptausdehnungsflächen (8) und mit zumindest drei an die Hauptausdehnungsflächen (8) angrenzenden Seitenflächen (9) gebildet ist, wobei das erste Haltemittel (2) im Bereich einer ersten Seitenfläche (9) und das zweite Haltemittel (2) im Bereich einer zweiten Seitenfläche (9) ausgebildet ist.

2. Füllkörper (1a) nach Anspruch 1, **dadurch gekennzeichnet, dass** der Füllkörper (1a) ein drittes Haltemittel (2) zum Herstellen einer Verbindung zwischen dem Füllkörper (1a) und einem vierten Füllkörper (1d) aufweist, wobei das Haltemittel (2) im Bereich einer Hauptausdehnungsfläche (8) ausgebildet und in den vierten Füllkörper (1d) einsteckbar ist.

3. Füllkörper (1a) nach Anspruch 1 oder 2, **dadurch gekennzeichnet, dass** der Füllkörper (1a) ein zu dem jeweiligen Haltemittel (2) korrespondierendes Gegenmittel (3) aufweist, vorzugsweise der Füllkörper (1a) die gleiche Anzahl von Haltemitteln (2) und Gegenmitteln (3) aufweist.

4. Füllkörper (1a) nach einem der Ansprüche 1 bis 3, **dadurch gekennzeichnet, dass** das jeweilige Haltemittel (2) und/oder das jeweilige Gegenmittel von der Außenkontur (8, 9) nach außen hervorstehend ausgebildet ist.

5. Füllkörper (1a) nach einem der Ansprüche 1 bis 4, **dadurch gekennzeichnet, dass** das Haltemittel (2) und/oder das Gegenmittel (3) in den Außenstäben (4, 4a) gelagert ist, insbesondere ein Teilbereich der Außenstäbe (4, 4a) das Gegenmittel (3) bildet.

6. Füllkörper (1a) nach einem der Ansprüche 1 bis 5, **dadurch gekennzeichnet, dass** das Haltemittel (2) in den zu verbindenden Füllkörper (1b, 1c, 1d), vorzugsweise in das Gegenmittel (3) des zu verbindenden Füllkörpers (1b, 1c, 1d), rastierend einsteckbar ist.

7. Füllkörper (1a) nach einem der Ansprüche 1 bis 6, **dadurch gekennzeichnet, dass** der Füllkörper (1a), insbesondere das jeweilige Haltemittel (2) und/oder das jeweilige Gegenmittel (3), einen von der Außenkontur (8, 9) nach außen hervorstehenden Abstandshalter (15) aufweist.

8. Füllkörper (1a) nach einem der Ansprüche 1 bis 7, **dadurch gekennzeichnet, dass** das Haltemittel (2) und/oder das Gegenmittel (3) verformbar ist, insbesondere elastisch verformbar ist.

9. Füllkörper (1a) nach einem der Ansprüche 2 bis 8, **dadurch gekennzeichnet, dass** das dritte Haltemittel (2) in zumindest zwei unterschiedlichen Ausrichtungen mit dem vierten Füllkörper (1d) verbindbar ist und/oder das dritte Haltemittel (2) drehbar in dem vierten Füllkörper (1d) lagerbar ist.

10. Füllkörper (1a) nach einem der Ansprüche 1 bis 9, **dadurch gekennzeichnet, dass** der Füllkörper (1a) einen ersten umlaufenden Außenstab (4) und einen zweiten umlaufenden Außenstab (4) aufweist, wobei der erste umlaufende Außenstab (4) die eine Hauptausdehnungsfläche (8) und der zweite umlaufende Außenstab (4) die andere Hauptausdehnungsfläche (8) umlaufend umschließt.

11. Füllkörper (1a) nach einem der Ansprüche 1 bis 9, **dadurch gekennzeichnet, dass** der Füllkörper (1a) andere Außenstäbe (4a) aufweist, wobei sich die anderen Außenstäbe (4a) zwischen den beiden Hauptausdehnungsflächen (8) erstrecken, insbesondere andere Außenstäbe (4a) die umlaufenden Außenstäbe (4) miteinander verbinden.

12. Füllkörper (1a) nach einem der Ansprüche 1 bis 11, **dadurch gekennzeichnet, dass** die Außenstäbe (4, 4a) jeweils im Übergangsbereich zwischen zwei Seitenflächen (11) oder im Übergangsbereich zwischen einer der beiden Hauptausdehnungsflächen (8) und einer der Seitenflächen (11) ausgebildet sind.

13. Füllkörper (1a) nach einem der Ansprüche 1 bis 12, **dadurch gekennzeichnet, dass** die Außenstruktur (4, 4a) im Bereich der einen Hauptausdehnungsfläche (8) und im Bereich der anderen Hauptausdehnungsfläche (8) jeweils mehrere nach außen gerichtete Kanten (22) aufweist, insbesondere in einer Aufsichtsprojektion zwei in Projektionsrichtung gegenüberliegende Kanten (22) zueinander versetzt ausgebildet sind.

14. Füllkörper (1a) nach Anspruch 13, **dadurch gekennzeichnet, dass** das Haltemittel (2) und/oder das Gegenmittel (3) in einer der Kanten (22) ausgebildet ist.

15. Füllkörper (1a) nach einem der Ansprüche 1 bis 14, **dadurch gekennzeichnet, dass** die Außenstruktur (4, 4a) in einem Randbereich der einen Hauptausdehnungsfläche (8) und/oder in einem Randbereich der anderen Hauptausdehnungsfläche (8) mehrere nach außen hervorstehende Teilbereiche (21) aufweist, insbesondere der erste umlaufende Außenstab (4) und/oder der zweite umlaufende Außenstab (4) einen alternierenden Verlauf aufweist.

16. Füllkörper (1a) nach Anspruch 15, **dadurch gekennzeichnet, dass** das Haltemittel (2) und/oder das Gegenmittel (3) in einem der hervorstehenden Teilbereiche (21) ausgebildet ist.

17. Füllkörper (1a) nach Anspruch 15 oder 16, **dadurch gekennzeichnet, dass** ein anderer Außenstab (4a) einen der im Randbereich der einen Hauptausdehnungsfläche (8) hervorstehender Teilbereiche (21) mit einem der im Randbereich der anderen Hauptausdehnungsfläche (8) hervorstehender Teilbereiche (21) verbindet.

18. Füllkörper (1a) nach einem der Ansprüche 1 bis 17, **dadurch gekennzeichnet, dass** die Hauptausdehnungsflächen (8) und/oder gegenüberliegende Seitenflächen (9) gleichsinnig gekrümmt und/oder die Hauptausdehnungsflächen (8) und/oder die Seitenflächen als Ebenen ausgebildet sind, vorzugsweise die beiden Hauptausdehnungsflächen (8) und/oder zwei gegenüberliegende Seitenflächen (9) zueinander parallel ausgebildet sind.

19. Füllkörper (1a) nach einem der Ansprüche 1 bis 18, **dadurch gekennzeichnet, dass** die Gesamtheit der Haltemittel (2) und/oder der Füllkörper (1a) und/oder die Außenkontur (8, 9) und/oder ein Querschnitt des Füllkörpers (1a) und/oder der Außenkontur (8, 9) radiärsymmetrisch und/oder spiegelsymmetrisch ausgebildet ist, insbesondere der Querschnitt der Außenkontur (8, 9) ein Polygon, insbesondere ein regelmäßiges Polygon bildet.

20. Füllkörper (1a) nach einem der Ansprüche 1 bis 19, **dadurch gekennzeichnet, dass** die Außenkontur (8, 9) prismenartig oder antiprismenartig, insbesondere in der Art eines geraden und/oder regulären Prismas oder Antiprismas mit vorzugsweise sechseckiger Grundfläche ausgebildet ist, wobei die Hauptflächen (8) die Grundfläche und die Deckfläche bilden.

21. Füllkörper (1a) nach einem der Ansprüche 1 bis 20, **dadurch gekennzeichnet, dass** der Füllkörper (1a), insbesondere die Außenkontur (8, 9) flach ausgebildet ist, insbesondere der Füllkörper (1a) die Abmessungen (L+B)^{∗}0,5=(2 bis 10)^{∗}H bei L=Länge, B=Breite und H=Höhe des Füllkörpers (1a) aufweist, wobei die Höhe des Füllkörpers (1a) die Abmessung des Füllkörpers (1a) von der einen Hauptausdehnungsfläche (8) in Richtung der anderen Hauptausdehnungsfläche (8) ist.

22. Füllkörper (1a) nach einem der Ansprüche 1 bis 21, **dadurch gekennzeichnet, dass** die Innenstruktur (5) zumindest ein inneres Leitprofil (14) aufweist, wobei das innere Leitprofil (14) geneigt zu den Hauptausdehnungsflächen (8) ausgebildet ist, insbesondere auf der Seite einer der Hauptausdehnungsflächen (8) durch die Außenstruktur (4) eine Ebene (6) gebildet ist, wobei das innere Leitprofil (14) geneigt zu der Ebene (6) ausgebildet ist, vorzugsweise ein Winkel (a) zwischen dem inneren Leitprofil (14) und der Ebene (6) ≥20° bis ≤70° beträgt.

23. Anordnung von zumindest drei vorzugsweise identisch ausgebildeten Füllkörpern (1a, 1b, 1c) nach einem der Ansprüche 1 bis 22, **dadurch gekennzeichnet, dass** die Füllkörper (1a, 1b, 1c) im Bereich aneinander angrenzender Seitenflächen (9) mittels der Haltemittel (2) miteinander verbunden sind, wobei die angeordneten Füllkörper (1a, 1b, 1c) eine flächige Lage (11) bilden, insbesondere die Ebenen (6) der Füllkörper (1a, 1b, 1c) in derselben Ebene (7) angeordnet sind.

24. Anordnung nach Anspruch 23, **dadurch gekennzeichnet, dass** die Füllkörper (1a, 1b, 1c) einer Lage (11) regelmäßig angeordnet sind, vorzugsweise die Füllkörper (1a, 1b, 1c) und/oder die Leitprofile (14) der Füllkörper (1a, 1b, 1c) identisch ausgerichtet sind.

25. Anordnung nach Anspruch 23 oder 24, **dadurch gekennzeichnet, dass** die Anordnung einen Volumenkörper bildet, insbesondere die Anordnung zumindest zwei aneinander angrenzende flächige Lagen (11) aufweist, insbesondere die Leitprofile (14) von im Bereich der Hauptausdehnungsflächen (8) angrenzenden Füllkörpern (1a, 1d) unterschiedlich ausgerichtet sind, vorzugsweise entgegengesetzt ausgerichtet sind.

## Claims

1. Packing body (1a), which can be passed through by a gas flow and/or liquid flow, in particular for use for mass transfer and/or heat exchange columns, having an outer structure (4, 4a), wherein the outer structure (4, 4a) is formed by outer bars (4, 4a), an inner structure (5), a first retaining means (2) for producing a connection between the packing body (1a) and a second packing body (1b), and having a second retaining means (2) for producing a connection between the packing body (1a) and a third packing body (1c), wherein the respective retaining means (2) can be inserted into the respective packing body (1b, 1c), **characterized in that** an outer contour (8, 9) having two main surfaces of extent (8) which face away from one another and having at least three side surfaces (9) adjacent to the main surfaces of extent (8) is formed by the outer structure (4, 4a), wherein the first retaining means (2) is formed in the region of a first side surface (9) and the second retaining means (2) is formed in the region of a second side surface (9).

2. Packing body (1a) according to Claim 1, **characterized in that** the packing body (1a) has a third retaining means (2) for producing a connection between the packing body (1a) and a fourth packing body (1d), wherein the retaining means (2) is formed in the region of a main surface of extent (8) and can be inserted into the fourth packing body (1d).

3. Packing body (1a) according to Claim 1 or 2, **characterized in that** the packing body (1a) has a mating means (3) corresponding to the respective retaining means (2), preferably the packing body (1a) has the same number of retaining means (2) and mating means (3).

4. Packing body (1a) according to one of Claims 1 to 3, **characterized in that** the respective retaining means (2) and/or the respective mating means is formed so as to protrude outwardly from the outer contour (8, 9).

5. Packing body (1a) according to one of Claims 1 to 4, **characterized in that** the retaining means (2) and/or the mating means (3) is mounted in the outer bars (4, 4a), in particular a subregion of the outer bars (4, 4a) forms the mating means (3).

6. Packing body (1a) according to one of Claims 1 to 5, **characterized in that** the retaining means (2) can be inserted in a locking manner into the packing body (1b, 1c, 1d) to be connected, preferably into the mating means (3) of the packing body (1b, 1c, 1d) to be connected.

7. Packing body (1a) according to one of Claims 1 to 6, **characterized in that** the packing body (1a), in particular the respective retaining means (2) and/or the respective mating means (3), has a spacer (15) which protrudes outwardly from the outer contour (8, 9) .

8. Packing body (1a) according to one of Claims 1 to 7, **characterized in that** the retaining means (2) and/or the mating means (3) is deformable, in particular is elastically deformable.

9. Packing body (1a) according to one of Claims 2 to 8, **characterized in that** the third retaining means (2) can be connected in at least two different orientations to the fourth packing body (1d), and/or the third retaining means (2) can be mounted rotatably in the fourth packing body (1d).

10. Packing body (1a) according to one of Claims 1 to 9, **characterized in that** the packing body (1a) has a first encircling outer bar (4) and a second encircling outer bar (4), wherein the first encircling outer bar (4) encloses the one main surface of extent (8) in an encircling manner and the second encircling outer bar (4) encloses the other main surface of extent (8) in an encircling manner.

11. Packing body (1a) according to one of Claims 1 to 9, **characterized in that** the packing body (1a) has other outer bars (4a), wherein the other outer bars (4a) extend between the two main surfaces of extent (8), in particular other outer bars (4a) connect the encircling outer bars (4) to one another.

12. Packing body (1a) according to one of Claims 1 to 11, **characterized in that** the outer bars (4, 4a) are respectively formed in the transition region between two side surfaces (11) or in the transition region between one of the two main surfaces of extent (8) and one of the side surfaces (11).

13. Packing body (1a) according to one of Claims 1 to 12, **characterized in that**, in the region of the one main surface of extent (8) and in the region of the other main surface of extent (8), the outer structure (4, 4a) respectively has a plurality of outwardly directed edges (22), in particular in a plan view projection two edges (22) which lie opposite in the projection direction are formed offset in relation to one another.

14. Packing body (1a) according to Claim 13, **characterized in that** the retaining means (2) and/or the mating means (3) is formed in one of the edges (22) .

15. Packing body (1a) according to one of Claims 1 to 14, **characterized in that**, in a peripheral region of the one main surface of extent (8) and/or in a peripheral region of the other main surface of extent (8), the outer structure (4, 4a) has a plurality of outwardly protruding subregions (21), in particular the first encircling outer bar (4) and/or the second encircling outer bar (4) has an alternating profile.

16. Packing body (1a) according to Claim 15, **characterized in that** the retaining means (2) and/or the mating means (3) is formed in one of the protruding subregions (21).

17. Packing body (1a) according to Claim 15 or 16, **characterized in that** another outer bar (4a) connects one of the subregions (21) protruding in the peripheral region of the one main surface of extent (8) to one of the subregions (21) protruding in the peripheral region of the other main surface of extent (8).

18. Packing body (1a) according to one of Claims 1 to 17, **characterized in that** the main surfaces of extent (8) and/or opposite side surfaces (9) are curved in the same direction and/or the main surfaces of extent (8) and/or the side surfaces are formed as planes, preferably the two main surfaces of extent (8) and/or two opposite side surfaces (9) are formed parallel to one another.

19. Packing body (1a) according to one of Claims 1 to 18, **characterized in that** the entirety of the retaining means and/or of the packing body (1a) and/or the outer contour (8, 9) and/or a cross section of the packing body (1a) and/or of the outer contour (8, 9) is of a radially symmetrical and/or mirror-symmetrical form, in particular the cross section of the outer contour (8, 9) forms a polygon, in particular a regular polygon.

20. Packing body (1a) according to one of Claims 1 to 19, **characterized in that** the outer contour (8, 9) is formed as prismatic or antiprismatic, in particular in the manner of a right and/or regular prism or antiprism, having a preferably hexagonal base area, wherein the main surfaces (8) form the base area and the top area.

21. Packing body (1a) according to one of Claims 1 to 20, **characterized in that** the packing body (1a), in particular the outer contour (8, 9), is of flat form, in particular the packing body (1a) has the dimensions (L+B)^{∗}0.5=(2 to 10)^{∗}H, where L=length, B=width and H=height of the packing body (1a), wherein the height of the packing body (1a) is the dimension of the packing body (1a) from the one main surface of extent (8) in the direction of the other main surface of extent (8).

22. Packing body (1a) according to one of Claims 1 to 21, **characterized in that** the inner structure (5) has at least one inner guide profile (14), wherein the inner guide profile (14) is formed as inclined with respect to the main surfaces of extent (8), in particular on the side of one of the main surfaces of extent (8) a plane (6) is formed by the outer structure (4), wherein the inner guide profile (14) is formed as inclined with respect to the plane (6), preferably an angle (α) between the inner guide profile (14) and the plane (6) amounts to ≥20° to ≤70°.

23. Arrangement of at least three preferably identically formed packing bodies (1a, 1b, 1c) according to one of Claims 1 to 22, **characterized in that** the packing bodies (1a, 1b, 1c) are connected to one another in the region of side surfaces (9) which are adjacent to one another by means of the retaining means (2), wherein the arranged packing bodies (1a, 1b, 1c) form a planar layer (11), in particular the planes (6) of the packing bodies (1a, 1b, 1c) are arranged in the same plane (7).

24. Arrangement according to Claim 23, **characterized in that** the packing bodies (1a, 1b, 1c) of a layer (11) are arranged in a regular manner, preferably the packing bodies (1a, 1b, 1c) and/or the guide profiles (14) of the packing bodies (1a, 1b, 1c) are oriented identically.

25. Arrangement according to Claim 23 or 24, **characterized in that** the arrangement forms a volume body, in particular the arrangement has at least two planar layers (11) which are adjacent to one another, in particular the guide profiles (14) of packing bodies (1a, 1d) which are adjacent in the region of the main surfaces of extent (8) are oriented differently, preferably are oriented oppositely.

## Revendications

1. Corps de remplissage (1a), lequel peut être traversé par un écoulement de gaz et/ou de liquide, en particulier destiné à être utilisé pour des colonnes d'échange de matière et/ou de chaleur, comprenant une structure extérieure (4, 4a), la structure extérieure (4, 4a) étant formée par des barres extérieures (4, 4a), une structure intérieure (5), un premier moyen de retenue (2) servant à réaliser une liaison entre le corps de remplissage (1a) et un deuxième corps de remplissage (1b) et comprenant un deuxième moyen de retenue (2) servant à réaliser une liaison entre le corps de remplissage (1a) et un troisième corps de remplissage (1c), le moyen de retenue (2) respectif pouvant être introduit dans le corps de remplissage (1b, 1c) respectif, **caractérisé en ce qu'**un contour extérieur (8, 9) présentant deux surfaces d'étendue principale (8) opposées l'une à l'autre et au moins trois surfaces latérales (9) adjacentes aux surfaces d'étendue principale (8) est formé par la structure extérieure (4, 4a), le premier moyen de retenue (2) étant réalisé dans la région d'une première surface latérale (9) et le deuxième moyen de retenue (2) étant réalisé dans la région d'une deuxième surface latérale (9) .

2. Corps de remplissage (1a) selon la revendication 1, **caractérisé en ce que** le corps de remplissage (1a) comprend un troisième moyen de retenue (2) servant à réaliser une liaison entre le corps de remplissage (1a) et un quatrième corps de remplissage (1d), le moyen de retenue (2) étant réalisé dans la région d'une surface d'étendue principale (8) et pouvant être introduit dans le quatrième corps de remplissage (1d).

3. Corps de remplissage (1a) selon la revendication 1 ou 2, **caractérisé en ce que** le corps de remplissage (1a) comprend un moyen conjugué (3) correspondant au moyen de retenue (2) respectif, de préférence le corps de remplissage (1a) présente le même nombre de moyens de retenue (2) et de moyens conjugués (3).

4. Corps de remplissage (1a) selon l'une des revendications 1 à 3, **caractérisé en ce que** le moyen de retenue (2) respectif et/ou le moyen conjugué respectif sont réalisés de manière à faire saillie vers l'extérieur à partir du contour extérieur (8, 9).

5. Corps de remplissage (1a) selon l'une des revendications 1 à 4, **caractérisé en ce que** le moyen de retenue (2) et/ou le moyen conjugué (3) sont montés dans les barres extérieures (4, 4a), en particulier une région partielle des barres extérieures (4, 4a) forme le moyen conjugué (3).

6. Corps de remplissage (1a) selon l'une des revendications 1 à 5, **caractérisé en ce que** le moyen de retenue (2) peut être introduit de manière encliquetée dans le corps de remplissage (1b, 1c, 1d) à relier, de préférence dans le moyen conjugué (3) du corps de remplissage (1b, 1c, 1d) à relier.

7. Corps de remplissage (1a) selon l'une des revendications 1 à 6, **caractérisé en ce que** le corps de remplissage (1a), en particulier le moyen de retenue (2) respectif et/ou le moyen conjugué (3) respectif, comprend une pièce d'écartement (15) faisant saillie vers l'extérieur à partir du contour extérieur (8, 9).

8. Corps de remplissage (1a) selon l'une des revendications 1 à 7, **caractérisé en ce que** le moyen de retenue (2) et/ou le moyen conjugué (3) sont déformables, en particulier déformables de manière élastique.

9. Corps de remplissage (1a) selon l'une des revendications 2 à 8, **caractérisé en ce que** le troisième moyen de retenue (2) peut être relié au quatrième corps de remplissage (1d) dans au moins deux orientations différentes et/ou le troisième moyen de retenue (2) peut être monté de manière rotative dans le quatrième corps de remplissage (1d).

10. Corps de remplissage (1a) selon l'une des revendications 1 à 9, **caractérisé en ce que** le corps de remplissage (1a) comprend une première barre extérieure périphérique (4) et une deuxième barre extérieure périphérique (4), la première barre extérieure périphérique (4) entourant l'une des surfaces d'étendue principale (8) de manière périphérique et la deuxième barre extérieure périphérique (4) entourant l'autre surface d'étendue principale (8) de manière périphérique.

11. Corps de remplissage (1a) selon l'une des revendications 1 à 9, **caractérisé en ce que** le corps de remplissage (1a) comprend d'autres barres extérieures (4a), les autres barres extérieures (4a) s'étendant entre les deux surfaces d'étendue principale (8), en particulier d'autres barres extérieures (4a) reliant l'une à l'autre les barres extérieures périphériques (4).

12. Corps de remplissage (1a) selon l'une des revendications 1 à 11, **caractérisé en ce que** les barres extérieures (4, 4a) sont réalisées respectivement dans la région de transition entre deux surfaces latérales (11) ou dans la région de transition entre l'une des deux surfaces d'étendue principale (8) et l'une des surfaces latérales (11).

13. Corps de remplissage (la) selon l'une des revendications 1 à 12, **caractérisé en ce que** la structure extérieure (4, 4a) comprend, dans la région de l'une des surfaces d'étendue principale (8) et dans la région de l'autre surface d'étendue principale (8), respectivement plusieurs arêtes (22) orientées vers l'extérieur, en particulier, dans une projection en vue de dessus, deux arêtes (22) opposées dans la direction de projection sont réalisées de manière décalée l'une par rapport à l'autre.

14. Corps de remplissage (la) selon la revendication 13, **caractérisé en ce que** le moyen de retenue (2) et/ou le moyen conjugué (3) sont réalisés dans l'une des arêtes (22) .

15. Corps de remplissage (la) selon l'une des revendications 1 à 14, **caractérisé en ce que** la structure extérieure (4, 4a) comprend, dans une région de bord de l'une des surfaces d'étendue principale (8) et/ou dans une région de bord de l'autre surface d'étendue principale (8), plusieurs régions partielles (21) faisant saillie vers l'extérieur, en particulier la première barre extérieure périphérique (4) et/ou la deuxième barre extérieure périphérique (4) présentent une allure alternée.

16. Corps de remplissage (la) selon la revendication 15, **caractérisé en ce que** le moyen de retenue (2) et/ou le moyen conjugué (3) sont réalisés dans l'une des régions partielles (21) saillantes.

17. Corps de remplissage (la) selon la revendication 15 ou 16, **caractérisé en ce qu'**une autre barre extérieure (4a) relie l'une des régions partielles (21) faisant saillie dans la région de bord de l'une des surfaces d'étendue principale (8) à l'une des régions partielles (21) faisant saillie dans la région de bord de l'autre surface d'étendue principale (8).

18. Corps de remplissage (la) selon l'une des revendications 1 à 17, **caractérisé en ce que** les surfaces d'étendue principale (8) et/ou les surfaces latérales opposées (9) sont courbées dans le même sens et/ou les surfaces d'étendue principale (8) et/ou les surfaces latérales sont réalisées sous forme de plans, de préférence les deux surfaces d'étendue principale (8) et/ou deux surfaces latérales opposées (9) sont réalisées parallèlement les unes aux autres.

19. Corps de remplissage (la) selon l'une des revendications 1 à 18, **caractérisé en ce que** l'ensemble des moyens de retenue (2) et/ou des corps de remplissage (la) et/ou le contour extérieur (8, 9) et/ou une section transversale du corps de remplissage (la) et/ou du contour extérieur (8, 9) sont réalisés de manière à présenter une symétrie radiale et/ou de manière à présenter une symétrie miroir, en particulier la section transversale du contour extérieur (8, 9) forme un polygone, en particulier un polygone régulier.

20. Corps de remplissage (la) selon l'une des revendications 1 à 19, **caractérisé en ce que** le contour extérieur (8, 9) est réalisé de manière prismatique ou antiprismatique, en particulier à la manière d'un prisme ou antiprisme droit et/ou régulier de surface de base de préférence hexagonale, les surfaces principales (8) formant la surface de base et la surface supérieure.

21. Corps de remplissage (la) selon l'une des revendications 1 à 20, **caractérisé en ce que** le corps de remplissage (la), en particulier le contour extérieur (8, 9), est réalisé de manière plane, en particulier le corps de remplissage (la) présente les dimensions (L+B)^{∗}0,5=(2 à 10)^{∗}H avec L = longueur, B = largeur et H = hauteur du corps de remplissage (la), la hauteur du corps de remplissage (la) étant la dimension du corps de remplissage (la) à partir de l'une des surfaces d'étendue principale (8) en direction de l'autre surface d'étendue principale (8).

22. Corps de remplissage (la) selon l'une des revendications 1 à 21, **caractérisé en ce que** la structure intérieure (5) comprend au moins un profilé de guidage intérieur (14), le profilé de guidage intérieur (14) étant réalisé de manière inclinée par rapport aux surfaces d'étendue principale (8), en particulier un plan (6) est formé par la structure extérieure (4) sur le côté de l'une des surfaces d'étendue principale (8), le profilé de guidage intérieur (14) étant réalisé de manière inclinée par rapport au plan (6), de préférence un angle (α) entre le profilé de guidage intérieur (14) et le plan (6) étant ≥ 20° et ≤ 70°.

23. Agencement d'au moins trois corps de remplissage (la, 1b, 1c) réalisés de préférence de manière identique selon l'une des revendications 1 à 22, **caractérisé en ce que** les corps de remplissage (la, 1b, 1c) sont reliés les uns aux autres au moyen des moyens de retenue (2) dans la région de surfaces latérales (9) adjacentes les unes aux autres, les corps de remplissage (la, 1b, 1c) agencés formant une couche plane (11), en particulier les plans (6) des corps de remplissage (la, 1b, 1c) étant disposés dans le même plan (7).

24. Agencement selon la revendication 23, **caractérisé en ce que** les corps de remplissage (la, 1b, 1c) d'une couche (11) sont disposés régulièrement, de préférence les corps de remplissage (la, 1b, 1c) et/ou les profilés de guidage (14) des corps de remplissage (la, 1b, 1c) sont orientés de manière identique.

25. Agencement selon la revendication 23 ou 24, **caractérisé en ce que** l'agencement forme un corps volumique, en particulier l'agencement comprend au moins deux couches planes (11) adjacentes les unes aux autres, en particulier les profilés de guidage (14) de corps de remplissage (la, 1d) adjacents dans la région des surfaces d'étendue principale (8) sont orientés différemment, de préférences sont orientés de manière opposée.
